# EUROPÄISCHE PATENTANMELDUNG

(11) **EP 3 291 646 A1**
(43) Veröffentlichungstag der Anmeldung: **07.03.2018**
(21) Anmeldenummer: 16186264.4
(22) Anmeldetag: 30.08.2016
(51) Int. Cl.: H05B 33/08, F21S 8/10

(54) **VERFAHREN ZUM BETRIEB EINES LEUCHTMITTELS MIT MINDESTENS EINER OLED, LEUCHTMITTEL UND HIERMIT AUSGESTATTETE FAHRZEUGLEUCHTE**

(71) Anmelder: odelo GmbH, 70329 Stuttgart (DE)
(72) Erfinder: VOLLMER, Marco, 71332 Waiblingen (DE)
(74) Vertreter: Benninger, Johannes

(57) **Zusammenfassung**

Es werden ein Verfahren zum Betrieb eines zur Erfüllung mindestens einer Lichtfunktion einer Fahrzeugleuchte (100) vorgesehenen Leuchtmittels (01), ein entsprechendes Leuchtmittel (01) mit mindestens einer OLED (20; 120) als wenigstens eine erste Lichtquelle (02) und mit mindestens einer zweiten, von einer OLED verschiedenen Lichtquelle (07; 70), und eine mit einem solchen Leuchtmittel (01) ausgestattete Fahrzeugleuchte (100) beschrieben. Das Verfahren sieht eine Überwachung einer Temperatur mindestens einer als wenigstens eine erste Lichtquelle (02) des Leuchtmittels (01) vorgesehenen OLED (20), und einen Vergleich der bei der Überwachung festgestellten Temperatur mit einer ersten Schwellentemperatur vor. Oberhalb der Schwellentemperatur wird die mindestens eine als eine OLED (20; 120) ausgeführte erste Lichtquelle (02) zwangsweise von der Stromversorgung getrennt. Dann erfüllt ausschließlich die mindestens eine zweite, von einer OLED verschiedene Lichtquelle (07; 70) die Lichtfunktion. Die zumindest eine erste Lichtquelle (02; 20; 120) und die mindestens eine zweite Lichtquelle (07; 70) des Leuchtmittels (01) sind mit einer abhängig von einem momentan vorgegebenen Betriebszustand schaltbaren Stromversorgung (03) verbunden oder verbindbar. Unterhalb einer ersten Schwellentemperatur ist die zumindest eine erste Lichtquelle (02; 20; 120) und oberhalb der ersten Schwellentemperatur die mindestens eine zweite Lichtquelle (07; 70) mit der abhängig von einem momentan vorgegebenen Betriebszustand schaltbaren Stromversorgung (03) verbunden oder verbindbar. Die Fahrzeugleuchte (100) umfasst wenigstens ein solches Leuchtmittel (01) zur Erfüllung oder zum Beitrag zu einer ihrer Lichtfunktionen.

## Beschreibung

Die Erfindung betrifft ein Verfahren gemäß dem Oberbegriff des Anspruchs 1, ein Leuchtmittel gemäß dem Oberbegriff des Anspruchs 6 und eine Fahrzeugleuchte gemäß dem Oberbegriff des Anspruchs 10.

Die Erfindung betrifft insbesondere eine Fahrzeugleuchte mit mindestens einem zur Erfüllung einer im Fahrbetrieb eines Fahrzeugs, insbesondere eines Kraftfahrzeugs vorgeschriebenen Lichtfunktion vorgesehenen oder einer vorgegebenen Lichtverteilung einer im Fahrbetrieb eines Fahrzeugs, insbesondere eines Kraftfahrzeugs vorgeschriebenen Lichtfunktion zumindest beitragenden Leuchtmittel mit wenigstens einer kurz als OLED (Organic Light Emitting Diode; OLED) bezeichneten organischen Leuchtdiode als mindestens eine Lichtquelle.

Eine Fahrzeugleuchte umfasst beispielsweise einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Fahrzeugleuchten Glühlampen, Gasentladungslampen sowie vermehrt anorganische Leuchtdioden zum Einsatz.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen.

Bekannt sind anorganische Leuchtdioden zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-Leuchtdioden, kurz THT-LEDs, sind ein gängig bekannter Typ anorganischer Leuchtdioden. Sie werden auch als bedrahtete Leuchtdioden bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-Leuchtdioden, kurz SMD-LEDs, sind ein weiterer bekannter Typ anorganischer Leuchtdioden. SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächenmontage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-Leuchtdioden, kurz COB-LEDs, bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet.

Im Folgenden wird deshalb der Einfachheit halber nicht mehr zwischen anorganischer Leuchtdiode und LED-Chip unterschieden und statt dessen einheitlich der Begriff LED stellvertretend für beides verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Mit anderen Worten weisen LEDs bei gleicher Lichtstärke einen im Vergleich zu anderen Lichtquellen geringeren Stromverbrauch auf. Hierdurch kann bei einer Verwendung einer oder mehrerer LEDS als Lichtquelle eines Leuchtmittels beispielsweise in einer Fahrzeugleuchte die Belastung eines zur Stromversorgung vorgesehenen Bordnetzes eines Fahrzeugs verringert werden, einhergehend mit Einsparungen beim Energieverbrauch des Fahrzeugs. Ferner weisen LEDs eine weit höhere Lebensdauer auf, als andere, zur Anwendung in einer Fahrzeugleuchte in Frage kommende Lichtquellen. Durch die längere Lebensdauer wird unter Anderem durch die geringere Ausfallquote die Betriebssicherheit und damit einhergehend die Qualität der Fahrzeugleuchte erhöht.

Herausragende Eigenschaften von LEDs im Vergleich zu anderen, konventionellen Lichtquellen von Leuchtmitteln sind eine wesentlich längere Lebensdauer und ihr sich in einer wesentlich höheren Lichtausbeute bei gleicher Leistungsaufnahme bemerkbar machender wesentlicher Vorzug eines hohen Wirkungsgrads bei der Umwandlung von elektrischem Strom in für das menschliche Auge sichtbares Licht. Dadurch und unter anderem auch wegen ihrer kompakteren Abmessungen können durch Verwendung von LEDs als Lichtquelle von Leuchtmitteln besonders kompakte Fahrzeugleuchten verwirklicht werden, die an fast jede nur erdenkliche Einbausituation angepasst sein können.

Die Verwendung kurz als OLED oder OLEDs (Organic Light Emitting Diode; OLED) bezeichneter organischer Leuchtdioden als Lichtquellen verspricht nicht nur die Nutzbarmachung der selben Vorzüge wie bei der Verwendung von aus anorganischen Halbleiterwerkstoffen hergestellten LEDs, sondern darüber hinausgehende Kostenvorteile, einhergehend mit dem zusätzlichen Vorteil, homogen leuchtende Flächen zu erzeugen.

Eine OLED ist ein leuchtendes Dünnschichtbauelement aus organischen halbleitenden Materialien mit mindestens einer zwischen elektrisch leitenden, beispielsweise metallischen Schichten für Anode und Kathode eingeschlossen Emitterschicht.

Im Unterschied zu LEDs benötigen OLEDs keine einkristallinen Materialien. Im Vergleich zu LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

Die Stärke oder anders ausgedrückt Dicke der Schichten liegt in einer Größenordnung von etwa 100 nm. Typischerweise beträgt sie je nach Aufbau 100 nm bis 500 nm.

Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material, insbesondere mit Glas verkapselt.

Eine effektive Verkapselung gegenüber Sauerstoff und Wasser zu einem Substrat hin, auf dem die eigentliche OLED einschließlich deren einer oder mehreren Emitterschichten Schicht um Schicht aufgebaut ist, geschieht beispielsweise durch eine Dünnglas-Schicht im oder auf dem Substrat.

Zwar gibt es Anstrengungen, das Glas durch Kunststoff zu ersetzen, die jedoch insbesondere um beispielsweise die Lebensdaueranforderung von Fahrzeugleuchten und deren Lichtquellen mit mehreren 1000 Stunden hinreichend gut zu erfüllen noch nicht vom gewünschten Erfolg gekrönt sind, weil die Dichtigkeit der alternativen Materialien für die Verkapselung nicht ausreichend gut genug ist.

Die Lebensdauer von OLEDs wird unter anderem durch auftretende Wärmebelastungen und durch Diffusionsprozesse durch sowie Schad- und Schwachstellen in deren Verkapselung herabgesetzt.

Eine wesentliche Einschränkung für den Einsatz von OLEDs ergibt sich dahingehend, dass OLEDs nicht so temperaturstabil wie LEDs sind.

Vor allem hohe Temperaturen führen zu einer schnell voranschreitende Alterung der OLEDs. Mit zunehmender Alterung steigt die Vorwärtsspannung irreversibel und stark an, wobei sich gleichzeitig die Leuchtdichte sich bei gleichbleibender, konstanter Bestromung irreversibel verringert. Dies führt zu unerwünschten Effekten, wie etwa einer geringeren Effizienz der OLEDs und einem damit einhergehenden höheren Temperatureintrag durch mit abnehmendem Wirkungsgrad zunehmende Abwärme.

Ein bei der Verwendung von OLEDs als Lichtquellen auftretender Nachteil ist, dass die Temperaturbelastbarkeit von OLEDs aufgrund deren organischer Materialien sowohl im Warm- als auch im Kaltzustand stark beschränkt ist. Die Ursache hierfür ist, dass die organischen Materialien ab einer bestimmten hohen Temperatur vollständig oder weitestgehend vollständig zerstört werden, so dass diese nicht mehr wie vorgesehen zum Leuchten der Emitterschicht angeregt werden können. Dies erfolgt ab Temperaturen von etwa 105°C und höher.

Die für OLEDs ertragbaren Höchsttemperaturen sind dabei bei deren Betrieb im so genannten Warmzustand niedriger, als in ausgeschaltetem Zustand im so genannten Kaltzustand. Damit können OLEDs nur innerhalb eingeschränkter Temperaturbereiche betrieben und auch bereitgehalten werden.

Dabei ist ein Betriebstemperaturbereich nach oben hin durch eine erste Temperaturgrenze begrenzt, wohingegen ein Bereithaltungstemperaturbereich durch eine im Vergleich zur ersten Temperaturgrenze höhere zweite Temperaturgrenze begrenzt ist.

Wird die erste Temperaturgrenze bei Betrieb einer OLED - dem so genannten Warmzustand - überschritten, bei welchem Betrieb die OLED unter Lichtabgabe stromdurchflossen ist, führt dies zur irreversiblen Zerstörung der OLED. Wird die zweite Temperaturgrenze bei Nichtbetrieb einer OLED - dem so genannten Kaltzustand - überschritten, bei welchem Nichtbetrieb die OLED weder stromdurchflossen ist, noch Licht abstrahlt, führt dies ebenfalls zur irreversiblen Zerstörung der OLED.

Grundsätzlich weisen LEDs und konventionelle Lichtquellen ebenfalls nach oben hin begrenzte, durch die zu ihrer Herstellung verwendeten Ausgangsmaterialien begrenzte Temperaturbereiche auf, innerhalb derer sie betrieben und bereitgehalten werden können. Diese Temperaturbereiche überschreiten jedoch deutlich die Temperaturgrenzen, bei denen OLEDs irreversible Zerstörungen erfahren.

Insbesondere die erste Temperaturgrenze, bei deren Überschreitung eine OLED bei deren Betrieb irreversibel zerstört wird, liegt dabei in einem Temperaturbereich, wie er beim Einsatz eines Fahrzeugs beispielsweise in heißen Regionen wie etwa unter direkter Sonneneinstrahlung innerhalb einer Fahrzeugleuchte entstehen kann.

Zusammengefasst weisen OLEDs aus den genannten Gründen insbesondere bei Fahrzeuganwendungen eine nur begrenzte Lebensdauer auf. Diese ist geringer, als beispielsweise in Verbindung mit einer Verwendung als Lichtquelle eines zur Erfüllung beispielsweise einer Schlusslichtfunktion vorgesehenen Leuchtmittels geforderten Mindestlebensdauer von 8000 Betriebsstunden im eingeschalteten Zustand.

Weiterhin erreichen OLEDs für einzelne Lichtfunktionen noch nicht ausreichend hohe Leuchtdichten über einen längeren Zeitraum, so dass sie beispielsweise für Rückfahrscheinwerferlichtfunktionen oder Bremslichtfunktionen noch nicht sinnvoll eingesetzt werden können.

Um dennoch OLEDs beispielsweise für Fahrzeuganwendungen vorsehen zu können steht die Möglichkeit zur Verfügung, diese niedriger zu bestromen und damit deren Leuchtdichte zu verringern um elektrische, thermische, und weitere Belastungen der OLED geringer zu halten. Ansonsten muss eine geringere Lebensdauer bei höheren Strom- und Leuchtdichten in Kauf genommen werden. Zusätzliche Möglichkeiten sind eine Vergrößerung der effektiv beispielsweise von außerhalb einer Fahrzeugleuchte sichtbare OLED-Leuchtfläche einhergehend mit einer Verminderung der Abschattung von OLEDs, sei dies gegenseitig und/oder durch Blenden.

Eine weitere Möglichkeit, um OLEDs beispielsweise für Fahrzeuganwendungen vorsehen zu können, sieht vor, die Lebensdaueranforderungen für OLEDs auf ein für den Nutzer eines Fahrzeugs akzeptables Mindestmaß zu verringern, beispielsweise auf 4000h oder 5000h anstelle 8000h.

Unabwendbar ist jedoch, die OLEDs bei hohen Umgebungstemperaturen oberhalb einer OLED-Oberflächentemperatur von 95°C abzuschalten, um irreversiblen Schaden von der OLED abzuwenden.

Hierbei werden die OLEDs bei höheren Umgebungstemperaturen von beispielsweise 45°C gedimmt, um die OLED-Belastung zu verringern. Diese Dimmung kann bis zu den gesetzlichen Mindestlichtwerten erfolgen.

Auch Kombinationen der beschriebenen Maßnahmen sind möglich, um OLEDs beispielsweise für Fahrzeuganwendungen vorsehen zu können, wie nachfolgendes Beispiel verdeutlicht.

Eine OLED als Lichtquelle eines zur Erfüllung oder zum Beitrag zu einer Lichtfunktion vorgesehenen Leuchtmittels ist auf 130% gesetzliche Mindestlichtwerte bei Raumtemperatur ausgelegt. Ab 50°C Umgebungstemperatur wird die Stromzufuhr zur OLED und damit die Lichtabgabe der OLED beispielsweise linear gedimmt, bis nur noch 100% gesetzliche Mindestlichtwerte erfüllt werden und/oder an der OLED beispielsweise eine Oberflächentemperatur von 95°C herrscht.

Bei einer Oberflächentemperatur der OLED von über 95°C wird die OLED abgeschaltet, da sonst die OLEDs nachhaltig schnell Schaden nehmen.

Durch US 2012/032612 A1 ist bekannt, mindestens eine OLED als wenigstens eine Lichtquelle zumindest eines Leuchtmittels zu betreiben, dessen zumindest eine Lichtquelle mit einer abhängig von einem momentan vorgegebenen Betriebszustand schaltbaren Stromversorgung verbunden ist, welcher momentan vorgegebene Betriebszustand einen Warmzustand oder einen Kaltzustand der zumindest einen Lichtquelle vorsieht. Dabei ist vorgesehen, eine Temperatur mindestens einer als wenigstens eine Lichtquelle des Leuchtmittels vorgesehenen OLED zu überwachen. Die bei der Überwachung festgestellten Temperatur wird mit einer ersten Schwellentemperatur verglichen. Die erste Schwellentemperatur liegt unterhalb einer Temperaturgrenze, bei deren Überschreitung eine sich in einem Warmzustand befindliche OLED eine irreversible Zerstörung erfährt. Die mindestens einen OLED wird im momentan vorgegebenen Betriebszustand betrieben, wenn die bei der Überwachung festgestellte Temperatur die erste Schwellentemperatur unterschreitet. Die mindestens einen OLED wird zwangsweise von der Stromversorgung unabhängig von dem momentan vorgegebenen Betriebszustand getrennt, wenn die bei der Überwachung festgestellte Temperatur die erste Schwellentemperatur erreicht hat oder überschreitet.

Durch DE 10 2005 024 838 A1 ist ein Leuchtmittel für den Innen- oder Außenbereich eines Fahrzeugs mit einer OLED als Lichtquelle bekannt.

Eine Aufgabe der Erfindung ist die Angabe eines Verfahrens zum Betrieb eines zur Erfüllung mindestens einer Lichtfunktion einer Fahrzeugleuchte vorgesehenen oder zumindest beitragenden Leuchtmittels mit mindestens einer OLED als wenigstens eine Lichtquelle, welches eine ausfallfreie Erfüllung und/oder einen ausfallfreien Beitrag zur Erfüllung der mindestens einen Lichtfunktion bei gleichzeitig zerstörungsfreiem Einsatz der OLED als Lichtquelle in solchen Fahrzeugleuchten ermöglicht, welche unter Anderem sowohl in heißen Regionen, als auch unter direkter Sonneneinstrahlung betreibbar sind. Ferner ist es eine Aufgabe der Erfindung, ein zur Ausführung eines solchen Verfahrens geeignetes Leuchtmittel und eine mit einem solchen Leuchtmittel ausgestattete Fahrzeugleuchte anzugeben.

Die Aufgabe wird jeweils gelöst mit den Merkmalen eines der unabhängigen Ansprüche. Vorteilhafte Ausführungsformen sind in den abhängigen Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zum Betrieb eines zur Erfüllung mindestens einer Lichtfunktion einer Fahrzeugleuchte vorgesehenen oder zumindest beitragenden Leuchtmittels mit mindestens einer OLED als wenigstens eine erste Lichtquelle und mit mindestens einer zweiten, von einer OLED verschiedenen Lichtquelle, vorzugsweise einer LED.

Das Verfahren sieht eine Überwachung einer Temperatur mindestens einer als wenigstens eine erste Lichtquelle des Leuchtmittels vorgesehenen OLED vor.

Das Verfahren sieht außerdem vor, die bei der Überwachung festgestellte Temperatur mit einer ersten Schwellentemperatur zu vergleichen. Das Verfahren sieht hierbei vor, dass die erste Schwellentemperatur unterhalb einer Temperaturgrenze liegt, bei deren Überschreitung eine stromdurchflossene und Licht abstrahlende, kurz sich im Warmzustand befindliche, OLED eine irreversible Zerstörung erfährt.

Eine solche erste Schwellentemperatur liegt vorzugsweise bei 95°C.

Schließlich sieht das Verfahren vor:
- die mindestens eine OLED unabhängig von einem momentan vorgegebenen Betriebszustand von der Stromversorgung zwangsweise zu trennen, wenn die bei der Überwachung festgestellte Temperatur die erste Schwellentemperatur überschreitet,
- spätestens mit der Überschreitung der ersten Schwellentemperatur die mindestens eine Lichtfunktion einer Fahrzeugleuchte, zu deren Erfüllung oder zu deren Beitrag bis zur ersten Schwellentemperatur mindestens eine OLED des Leuchtmittels vorgesehen ist, mittels mindestens einer zweiten, von einer OLED verschiedenen Lichtquelle des Leuchtmittels zu erfüllen oder zu deren Erfüllung beizutragen, und
- die zwangsweise Trennung der OLED von der Stromversorgung aufzuheben, wenn die bei der Überwachung festgestellte Temperatur die erste Schwellentemperatur unterschreitet, und die OLED in einen momentan vorgegebenen Betriebszustand, bei dem die OLED entweder von der Stromversorgung getrennt oder die Stromversorgung aufgeschaltet ist, zu entlassen, sowie die Erfüllung der Lichtfunktion oder das Beitragen hierzu mittels der zweiten, von der OLED verschiedenen Lichtquelle aufzuheben.

Grundsätzlich kann eine Überwachung einer Temperatur mindestens einer als wenigstens eine Lichtquelle des Leuchtmittels vorgesehenen OLED erfolgen, indem eine Temperatur erfasst wird, von welcher Temperatur aus auf die Temperatur der OLED rückgeschlossen werden kann.

Die Überwachung der Temperatur erfolgt beispielsweise durch Erfassung einer Temperatur der OLED und/oder einer Temperatur einer unmittelbaren Umgebung mindestens einer als wenigstens eine erste Lichtquelle des Leuchtmittels vorgesehenen OLED und/oder durch Erfassung mindestens einer einer Temperatur der OLED und/oder einer Temperatur einer unmittelbaren Umgebung der OLED proportionalen Größe.

Eine denkbare Größe ist beispielsweise ein bei konstanter Spannung durch ein Elektronikbauteil des Leuchtmittels fließender, sich mit verändernder Temperatur verändernder Strom und/oder eine sich bei konstantem durch ein Elektronikbauteil des Leuchtmittels fließendem Strom mit verändernder Temperatur verändernde Spannung. Auch die Messung eines sich mit verändernder Temperatur verändernden Widerstands eines Elektronikbauteils, sei es ein induzierter oder ein ohmscher Widerstand, eignet sich grundsätzlich als Größe zur Erfassung einer Temperatur.

Bei dem Elektronikbauteil kann es sich um einen Temperatursensor, einen Widerstand, ein Halbleiterbauelement oder gar um wenigstens eine als erste Lichtquelle dienende OLED oder mindestens eine zweite Lichtquelle, beispielsweise eine LED, des Leuchtmittels handeln, um nur einige denkbare Ausgestaltungen zu nennen. Beispielsweise eignet sich eine Strom- und/oder Spannungskurve einer LED und/oder einer OLED, um anhand der erfassten Werte für den Strom und/oder die Spannung auf die momentan vorherrschende Temperatur rückzuschließen, welche die LED und/oder die OLED gerade erfährt bzw. welcher die LED und/oder die OLED gerade ausgesetzt ist.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Das Verfahren kann ferner eine Überwachung eines vorgegebenen Betriebszustands für mindestens eine erste und/oder zweite Lichtquelle des Leuchtmittels vorsehen, wobei zwischen einem Warmzustand, bei dem zur Erfüllung einer Lichtfunktion oder zu deren Beitragen eine schaltbare Stromversorgung aufgeschaltet ist und zumindest eine erste Lichtquelle und/oder eine zweite Lichtquelle des Leuchtmittels unter Lichtabgabe stromdurchflossen ist, und einem Kaltzustand unterschieden wird, bei dem momentan keine Lichtfunktion zu erfüllen und auch keiner Erfüllung einer Lichtfunktion beizutragen ist, und demnach die schaltbare Stromversorgung getrennt und/oder abgeschaltet ist und weder eine als eine erste Lichtquelle vorgesehene OLED, noch eine von einer OLED verschiedene zweite Lichtquelle stromdurchflossen ist, geschweige denn Licht abstrahlt.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die mindestens eine zumindest unterhalb der ersten Schwellentemperatur durch wenigstens eine OLED gebildete erste Lichtquelle sowie zumindest oberhalb der ersten Schwellentemperatur für die mindestens eine von der OLED verschiedene zweite Lichtquelle des Leuchtmittels vorgesehenen Betriebszustand. Der vorgegebene Betriebszustand sieht momentan einen Warmzustand oder einen Kaltzustand der OLED beziehungsweise alternativ oder zusätzlich der von der OLED verschiedenen zweiten Lichtquelle vor.

Sieht der momentane Betriebszustand einen Warmzustand vor, so ist die von dem Leuchtmittel zu erfüllende oder zur Erfüllung beizutragende Lichtfunktion momentan benötigt und entsprechend muss die Lichtfunktion erfüllendes oder deren Erfüllung beitragendes Licht von einer oder mehreren Lichtquellen des Leuchtmittels abgestrahlt werden.

Sieht der momentane Betriebszustand einen Kaltzustand vor, so ist die von dem Leuchtmittel zu erfüllende oder zur Erfüllung beizutragende Lichtfunktion momentan nicht benötigt und entsprechend muss kein die Lichtfunktion erfüllendes oder deren Erfüllung beitragendes Licht von der oder den Lichtquellen des Leuchtmittels abgestrahlt werden.

Durch die Überwachung des momentan vorgegebenen Betriebszustands kann das Verfahren vorsehen:
- die OLED von der Stromversorgung zwangsweise zu trennen und in den Kaltzustand zu versetzen und die mindestens eine von der OLED verschiedene zweite Lichtquelle mit der Stromversorgung zwangsweise zu verbinden und in den Warmzustand zu versetzen, wenn die bei der Überwachung festgestellte Temperatur die erste Schwellentemperatur überschreitet und der überwachte, vorgegebene Betriebszustand den Warmzustand der OLED oder der mindestens einen von der OLED verschiedenen zweiten Lichtquelle vorsieht,
- die bei der Überwachung festgestellte Temperatur die erste Schwellentemperatur überschreitet und der überwachte, vorgegebene Betriebszustand den Kaltzustand der OLED vorsieht, die OLED im Kaltzustand zu belassen und eine Aufschaltung der Stromversorgung der OLED zwangsweise zu unterbinden, sowie nur eine Aufschaltung der Stromversorgung der mindestens einen von der OLED verschiedenen zweiten Lichtquelle zu gestatten, und
- die bei der Überwachung festgestellte Temperatur die erste Schwellentemperatur unterschreitet, die zwangsweise Trennung und/oder zwangsweise Unterbindung der Stromversorgung der OLED aufzuheben und die OLED in den überwachten, momentan vorgegebenen Betriebszustand, bei dem die OLED entweder von der Stromversorgung getrennt oder die Stromversorgung aufgeschaltet ist, zu entlassen, sowie die Aufschaltung der Stromversorgung der mindestens einen von der OLED verschiedenen zweiten Lichtquelle zumindest zur Erfüllung der Lichtfunktion oder zu deren Beitrag zu unterbinden.

Die Erfindung erlaubt einen Schutz von als Lichtquellen für Leuchtmittel zum Einsatz in Fahrzeugleuchten verwendeten OLEDs vor einer Zerstörung durch Überhitzung unter gleichzeitiger Sicherstellung der ständigen Bereitschaft einer Erfüllung einer momentan benötigten, zumindest unterhalb einer ersten Schwellentemperatur durch eine OLED als eine erste Lichtquelle des Leuchtmittels zu erfüllenden Lichtfunktion.

Um OLEDs vor einer Überhitzung und damit vor einer Zerstörung zu schützen, sieht die Erfindung ein hartes Abschalten von OLEDs oberhalb einer ersten Schwellentemperatur vor, die unterhalb deren im Betrieb ertragbaren ersten Temperaturgrenze von vorzugsweise 95°C liegt.

Um eine durch ständiges Hin- und Herschalten zwischen der durch die OLED gebildeten ersten Lichtquelle und der mindestens einen von der OLED verschiedenen zweiten Lichtquelle flackernd erscheinende Lichtabgabe des Leuchtmittels zu vermeiden, kann das Verfahren die Aufhebung der zwangsweisen Trennung und/oder zwangsweisen Unterbindung einhergehend mit einer Entlassung der OLED in einen momentan vorgegebenen Betriebszustand und damit ein Wiedereinschalten der OLED bei einem momentanen vorgegebenen Betriebszustand, der einen Warmzustand der OLED vorsieht, erst ab einer zweiten Schwellentemperatur vorsehen, die unterhalb der ersten Schwellentemperatur liegt, beispielsweise um deutliche 5° unter der ersten Schwellentemperatur.

Hierzu kann das Verfahren zusätzlich vorsehen, die OLED erst dann wieder in den momentan vorgegebenen Betriebszustand, bei dem die OLED anstelle der mindestens einen von der OLED verschiedenen zweiten Lichtquelle des Leuchtmittels entweder von der Stromversorgung getrennt oder zur Erfüllung oder zum Beitrag zu einer momentan benötigten Lichtfunktion die Stromversorgung aufgeschaltet ist, zu entlassen, wenn die bei der Überwachung festgestellte Temperatur die erste Schwellentemperatur unterschreitet und kleiner oder gleich der zweiten Schwellentemperatur ist.

Ein zweiter Gegenstand der Erfindung betrifft ein zur Ausführung eines zuvor beschriebenen Verfahrens geeignetes, zu einer Erfüllung einer Lichtfunktion einer Fahrzeugleuchte geeignetes oder zumindest beitragenden Leuchtmittel.

Das Leuchtmittel weist mindestens eine OLED als wenigstens eine erste Lichtquelle auf.

Das Leuchtmittel weist mindestens eine von einer OLED verschiedene zweite Lichtquelle, vorzugsweise mindestens eine LED auf.

Das Leuchtmittel weist Temperaturüberwachungsmittel zur Überwachung der Temperatur mindestens einer als erste Lichtquelle vorgesehenen OLED auf.

Die Temperaturüberwachungsmittel umfassen beispielsweise Mittel zur Erfassung einer Temperatur, welche einen Rückschluss auf die Temperatur mindestens einer als eine erste Lichtquelle des Leuchtmittels vorgesehenen OLED zulässt, beispielsweise durch unmittelbare Erfassung der Temperatur der OLED oder einer der OLED proportionalen Temperatur.

Die Temperaturüberwachungsmittel können beispielsweise der Erfassung einer Temperatur der OLED und/oder einer Temperatur einer unmittelbaren Umgebung mindestens einer OLED dienen.

Grundsätzlich kann demnach eine Überwachung einer Temperatur mindestens einer als wenigstens eine erste Lichtquelle des Leuchtmittels vorgesehenen OLED erfolgen, indem eine Temperatur erfasst wird, von welcher Temperatur aus auf die Temperatur der OLED rückgeschlossen werden kann.

Alternativ oder zusätzlich können die Temperaturüberwachungsmittel mindestens einer als erste Lichtquelle des Leuchtmittels vorgesehenen OLED der Erfassung mindestens einer einer Temperatur der OLED und/oder einer Temperatur einer unmittelbaren Umgebung der OLED proportionalen Größe dienen.

Eine denkbare Größe ist beispielsweise ein bei konstanter Spannung durch ein Elektronikbauteil des Leuchtmittels fließender, sich mit verändernder Temperatur verändernder Strom und/oder eine sich bei konstantem durch ein Elektronikbauteil des Leuchtmittels fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils eignet sich grundsätzlich als Größe zur Erfassung einer Temperatur.

Bei dem Elektronikbauteil kann es sich um einen Temperatursensor, einen Widerstand, ein Halbleiterbauelement oder gar um eine erste oder zweite Lichtquelle des Leuchtmittels, beispielsweise eine OLED oder eine LED, handeln, um nur einige denkbare Ausgestaltungen zu nennen. Beispielsweise eignet sich eine Strom- und/oder Spannungskurve einer LED und/oder einer OLED, um anhand der erfassten Werte für den Strom und/oder die Spannung auf die momentan vorherrschende Temperatur rückzuschließen, welche die LED und/oder die OLED gerade erfährt bzw. welcher die LED und/oder die OLED gerade ausgesetzt ist.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Die Temperaturüberwachungsmittel mindestens einer als erste Lichtquelle des Leuchtmittels vorgesehenen OLED können Mittel zur Erfassung einer oder mehrerer und/oder eine Kombination zuvor genannter Größen umfassen und/oder sie können eines oder mehrere und/oder eine Kombination der erwähnten Elektronikbauteile umfassen und/oder sie können einen oder mehrere Temperatursensoren, wie etwa einen oder mehrere und/oder eine Kombination der zuvor genannten Temperatursensoren umfassen.

Das Leuchtmittel verfügt außerdem über Vergleichsmittel der bei der Überwachung festgestellten Temperatur mit einer ersten Schwellentemperatur, welche unterhalb einer Temperaturgrenze liegt, bei deren Überschreitung eine sich im Warmzustand befindliche OLED eine irreversible Zerstörung erfährt.

Eine solche Schwellentemperatur beträgt beispielsweise bevorzugt 95°C.

Die Vergleichsmittel sehen vor, ein Ausgangssignal zu erzeugen, welches zumindest zwischen einer höheren Temperatur, als der ersten Schwellentemperatur, und einer niedrigeren Temperatur, als der ersten Schwellentemperatur unterscheidet.

Das Ausgangssignal dient der Veranlassung oder dem Bewirken,
- die OLED unabhängig von einem momentan vorgegebenen Betriebszustand von der Stromversorgung zwangsweise zu trennen, wenn die bei der Überwachung festgestellte Temperatur die erste Schwellentemperatur überschreitet,
- spätestens mit der Überschreitung der ersten Schwellentemperatur die mindestens eine zur Erfüllung oder zu deren Beitrag durch eine OLED vorgesehene Lichtfunktion einer Fahrzeugleuchte mittels mindestens einer zweiten, von einer OLED verschiedenen Lichtquelle zu erfüllen oder zu deren Erfüllung beizutragen, und
- die zwangsweise Trennung der OLED von der Stromversorgung aufzuheben, wenn die bei der Überwachung festgestellte Temperatur die erste Schwellentemperatur unterschreitet, und die OLED in einen momentan vorgegebenen Betriebszustand, bei dem die OLED entweder von der Stromversorgung getrennt oder die Stromversorgung aufgeschaltet ist, zu entlassen, sowie die Erfüllung der Lichtfunktion oder das Beitragen hierzu mittels der zweiten, von der OLED verschiedenen Lichtquelle aufzuheben.

Das Leuchtmittel kann ferner Steuerungsmittel umfassen, welche sowohl das Ausgangssignal der Vergleichsmittel, als auch ein einen zwischen einem momentanen Bedarf eines Warmzustands mindestens einer ersten und/oder wenigstens einer zweiten Lichtquelle des Leuchtmittels entsprechend einer Lichtabgabe zur momentan erforderlichen Erfüllung oder einem Beitrag zu einer Lichtfunktion und einem momentanen Bedarf eines Kaltzustands sowohl des mindestens einen ersten, als auch der wenigstens einen zweiten Lichtquelle des Leuchtmittels entsprechend keiner momentan erforderlichen Erfüllung oder keines Beitrags hierzu einer Lichtfunktion unterscheidenden, momentan benötigten Betriebszustand anzeigendes Schaltsignal empfängt und entsprechend eine Steuerung der ersten und zweiten Lichtquellen des Leuchtmittels vornimmt. Diese von der Steuerungseinrichtung anhand des Ausgangssignals und des Schaltsignals vorgenommene Steuerung sieht vor:
- die OLED von der Stromversorgung zwangsweise zu trennen und in den Kaltzustand zu versetzen und die mindestens eine von der OLED verschiedene zweite Lichtquelle mit der Stromversorgung zwangsweise zu verbinden und in den Warmzustand zu versetzen, wenn die bei der Überwachung festgestellte Temperatur die erste Schwellentemperatur überschreitet und der überwachte, vorgegebene Betriebszustand den Warmzustand der OLED oder der mindestens einen von der OLED verschiedenen zweiten Lichtquelle vorsieht,
- die bei der Überwachung festgestellte Temperatur die erste Schwellentemperatur überschreitet und der überwachte, vorgegebene Betriebszustand den Kaltzustand der OLED vorsieht, die OLED im Kaltzustand zu belassen und eine Aufschaltung der Stromversorgung der OLED zwangsweise zu unterbinden, sowie nur eine Aufschaltung der Stromversorgung der mindestens einen von der OLED verschiedenen zweiten Lichtquelle zu gestatten, und
- die bei der Überwachung festgestellte Temperatur die erste Schwellentemperatur unterschreitet, die zwangsweise Trennung und/oder zwangsweise Unterbindung der Stromversorgung der OLED aufzuheben und die OLED in den überwachten, momentan vorgegebenen Betriebszustand, bei dem die OLED entweder von der Stromversorgung getrennt oder die Stromversorgung aufgeschaltet ist, zu entlassen, sowie die Aufschaltung der Stromversorgung der mindestens einen von der OLED verschiedenen zweiten Lichtquelle zumindest zur Erfüllung der Lichtfunktion oder zu deren Beitrag zu unterbinden.

Um eine durch ständiges Hin- und Herschalten zwischen der durch die OLED gebildeten ersten Lichtquelle und der mindestens einen von der OLED verschiedenen zweiten Lichtquelle flackernd erscheinende Lichtabgabe des Leuchtmittels zu vermeiden, können die Vergleichsmittel zusätzlich zum Vergleich der bei der Überwachung festgestellten Temperatur mit der ersten Schwellentemperatur einen Vergleich der bei der Überwachung festgestellten Temperatur mit einer zweiten Schwellentemperatur vorsehen, welche zweite Schwellentemperatur eine deutlich, zumindest um 5° niedrigere Temperatur, als die erste Schwellentemperatur vorsieht.

Die Vergleichsmittel sehen hierbei vor, ein Ausgangssignal zu erzeugen, welches zwischen einer höheren Temperatur, als der ersten Schwellentemperatur, einer zwischen der ersten Schwellentemperatur und der zweiten Schwellentemperatur liegenden mittleren Temperatur und einer niedrigeren Temperatur, als der zweiten Schwellentemperatur unterscheidet.

Hierdurch wird die OLED erst dann wieder in den momentan vorgegebenen Betriebszustand, bei dem die OLED entweder von der Stromversorgung getrennt oder die Stromversorgung aufgeschaltet ist, entlassen, wenn die bei der Überwachung festgestellte Temperatur die erste Schwellentemperatur unterschreitet und kleiner oder gleich der zweiten Schwellentemperatur ist.

Damit erfolgt ein Einschalten oder Wiedereinschalten der OLED bei einem momentanen vorgegebenen Betriebszustand, der einen Warmzustand der OLED oder der von der OLED verschiedenen zweiten Lichtquelle des Leuchtmittels vorsieht, erst ab der zweiten Schwellentemperatur, die unterhalb der ersten Schwellentemperatur liegt, beispielsweise um deutliche 5° unter der ersten Schwellentemperatur.

Ein dritter Gegenstand der Erfindung betrifft eine Fahrzeugleuchte mit zumindest einem zuvor beschriebenen Leuchtmittel.

Die Fahrzeugleuchte kann einen von einem Leuchtengehäuse und einer Lichtscheibe ganz oder teilweise umschlossenen Leuchteninnenraum aufweisen, der das mindestens eine Leuchtmittel beherbergt.

Es ist ersichtlich, dass die Erfindung verwirklicht sein kann durch eine Fahrzeugleuchte mit mindestens einem zur Erfüllung einer im Fahrbetrieb eines Fahrzeugs, insbesondere eines Kraftfahrzeugs vorgeschriebenen Lichtfunktion vorgesehenen oder einer vorgegebenen Lichtverteilung einer im Fahrbetrieb eines Fahrzeugs, insbesondere eines Kraftfahrzeugs vorgeschriebenen Lichtfunktion zumindest beitragenden Leuchtmittel mit wenigstens einer OLED als mindestens eine erste Lichtquelle, sowie mindestens eine von einer OLED verschiedene, beispielsweise eine oder mehrere LEDs umfassende zweite Lichtquelle.

Damit das Leuchtmittel auch bei Überschreitung einer Temperaturgrenze von beispielsweise 95°C, oberhalb der die mindestens eine OLED im Warmzustand eine irreversible Zerstörung erfährt, in der Lage ist, weiterhin Licht abzustrahlen, sieht die Erfindung wenigstens eine zusätzliche zweite Lichtquelle vorzugsweise in Form einer thermisch stabileren LED vor.

Der zweiten Lichtquelle kann ein durch wenigstens eine reflektorartig ausgestaltete, beispielsweise mit einer gewölbten und reflektierenden oder verspiegelten Oberfläche ausgeführte OLED des Leuchtmittels gebildeter Reflektor zugeordnet sein. Die als eine zweite Lichtquelle des Leuchtmittels vorgesehene LED strahlt hierbei ihr Licht via den durch die reflektorartig ausgestaltete OLED gebildeten Hybrid-Reflektor gemäß den Vorgaben an eine Lichtverteilung ab.

Ein Betrieb der LED kann nur oberhalb der durch die erste Schwellentemperatur gebildeten Temperaturgrenze vorgesehen sein, oder ab einer Temperatur knapp unterhalb der Temperaturgrenze.

Alternativ oder zusätzlich kann dem Hybrid-Reflektor eine zweite OLED vorgesetzt sein, die eine Hybrid-Linse bildet. Unterhalb der durch die erste Schwellentemperatur gebildeten Temperaturgrenze strahlt die Hybrid-Linse ebenfalls Licht ab, gegebenenfalls in Überlagerung und/oder Ergänzung zur Lichtabstrahlung des Hybrid-Reflektors. Oberhalb der Temperaturgrenze trägt die Hybrid-Linse einer vorgegebenen Lichtverteilung des von der LED abgestrahlten und gegebenenfalls von dem Hybrid-Reflektor umgelenkten Lichts bei.

Technische Vorteile ergeben sich dadurch, dass bisherige OLEDs als Lichtquellen von Leuchtmitteln für Fahrzeuganwendungen oberhalb einer Temperaturgrenze abgeschaltet werden müssen, um eine irreversible Zerstörung zu vermeiden. Dadurch fällt eine durch das Leuchtmittel erfüllte Lichtfunktion vollständig aus. Vermittels der beschriebenen hybriden Ausgestaltung kann oberhalb der Temperaturgrenze der Betrieb der OLED eingestellt werden, wobei dann die zweite Lichtquelle, vorzugsweise eine LED, zur Erfüllung der Lichtfunktion dient.

Die LED bildet damit eine redundante Not-Lichtquelle für hohe Betriebs- und/oder Umgebungstemperaturen.

Denkbar ist, die Funktionsfähigkeit der OLED sensorisch festzustellen, so dass auch bei einem gleichwie bedingten Ausfall der OLED die LED als Notbeleuchtung einspringen kann.

Wichtig ist hervorzuheben, dass die erfindungsgemäße Fahrzeugleuchte einzelne Merkmale oder eine beliebige Kombination von zwei oder mehreren Merkmalen eines zuvor beschriebenen erfindungsgemäßen Leuchtmittels und/oder eines zuvor beschriebenen erfindungsgemäßen Verfahrens aufweisen und/oder verwirklichen kann, ebenso wie das erfindungsgemäße Leuchtmittel einzelne Merkmale oder eine beliebige Kombination von zwei oder mehreren Merkmalen einer zuvor beschriebenen erfindungsgemäßen Fahrzeugleuchte und/oder eines zuvor beschriebenen erfindungsgemäßen Verfahrens aufweisen und/oder verwirklichen kann. Darüber hinaus kann das zuvor beschriebene erfindungsgemäße Verfahren einzelne Merkmale oder eine beliebige Kombination von zwei oder mehreren Merkmalen einer zuvor beschriebenen erfindungsgemäßen Fahrzeugleuchte und/oder eines zuvor beschriebenen erfindungsgemäßen Leuchtmittels aufweisen und/oder verwirklichen.

Ebenfalls wichtig ist hervorzuheben, dass das erfindungsgemäße Verfahren und/oder das erfindungsgemäße Leuchtmittel und/oder die erfindungsgemäße Fahrzeugleuchte alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen können.

Ebenso wie die erfindungsgemäße Fahrzeugleuchte es erlaubt, die Vorteile des erfindungsgemäßen Leuchtmittels und/oder des erfindungsgemäßen Verfahrens zu nutzen, erlaubt auch das erfindungsgemäße Leuchtmittel, sämtliche Vorteile der erfindungsgemäßen Fahrzeugleuchte und/oder des erfindungsgemäßen Verfahrens nutzbar zu machen, genauso wie auch das erfindungsgemäße Verfahren es erlaubt, sämtliche Vorteile der erfindungsgemäßen Fahrzeugleuchte und/oder des erfindungsgemäßen Leuchtmittels nutzbar zu machen.

Die Erfindung sowie durch sie erzielbare zusätzliche, über die vollständige Lösung der gestellten Aufgabe und/oder über die voran zu den einzelnen Merkmalen genannten Vorteile hinausgehende Vorteile gegenüber dem Stand der Technik werden nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein Ablaufdiagramm eines erfindungsgemäßen Verfahrens.
- Fig. 2: ein Schaltbild eines ersten Ausführungsbeispiels eines erfindungsgemäßen Leuchtmittels.
- Fig. 3: ein Schaltbild eines zweiten Ausführungsbeispiels eines erfindungsgemäßen Leuchtmittels mit integrierter, schaltbarer Stromversorgung.
- Fig. 4: ein Ausführungsbeispiel eines erfindungsgemäßen Leuchtmittels in einem Querschnitt in Fig. 4 a) und in einer Vorderansicht in Fig. 4 b).
- Fig. 5: ein Ausführungsbeispiel einer erfindungsgemäßen Fahrzeugleuchte in einer Draufsicht auf deren Lichtscheibe in Fig. 5 a) und in einem Querschnitt in Fig. 5 b).
- Fig. 6: ein Ausführungsbeispiel eines erfindungsgemäßen Leuchtmittels in einer Vorderansicht.

- Fig. 7: ein Ausführungsbeispiel einer erfindungsgemäßen Fahrzeugleuchte in einem Querschnitt.

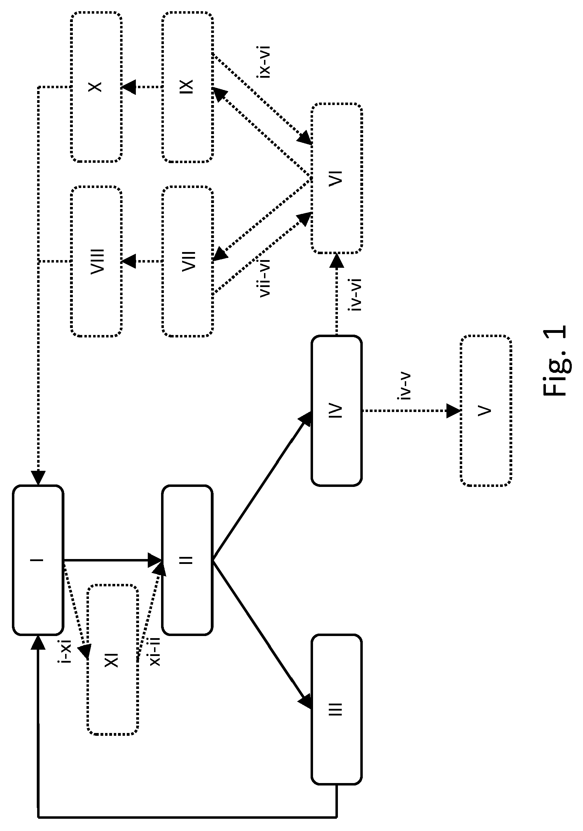

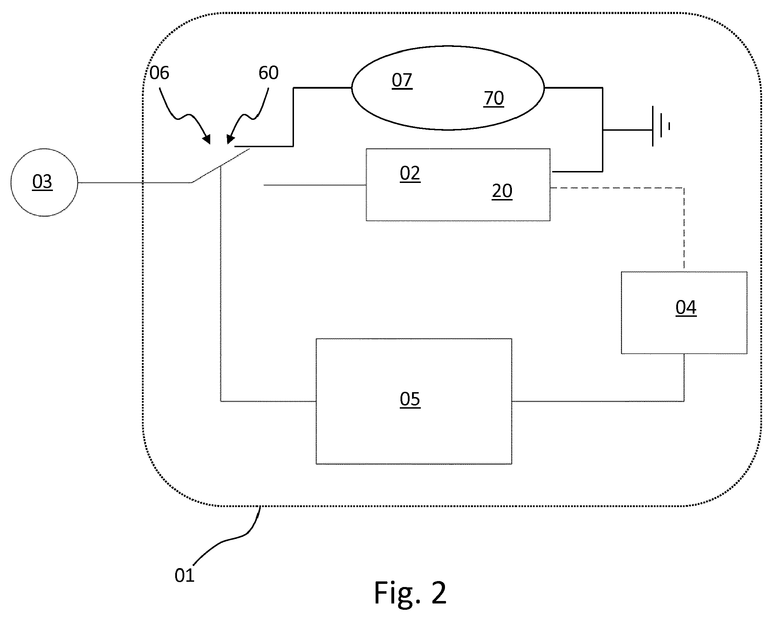

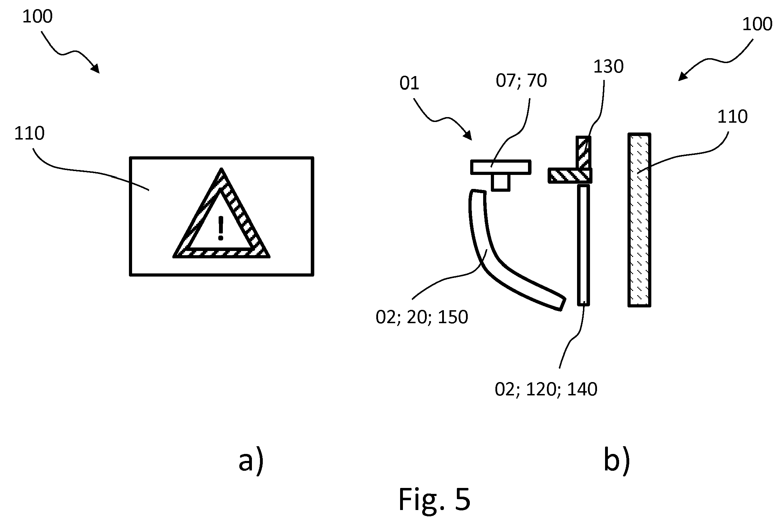

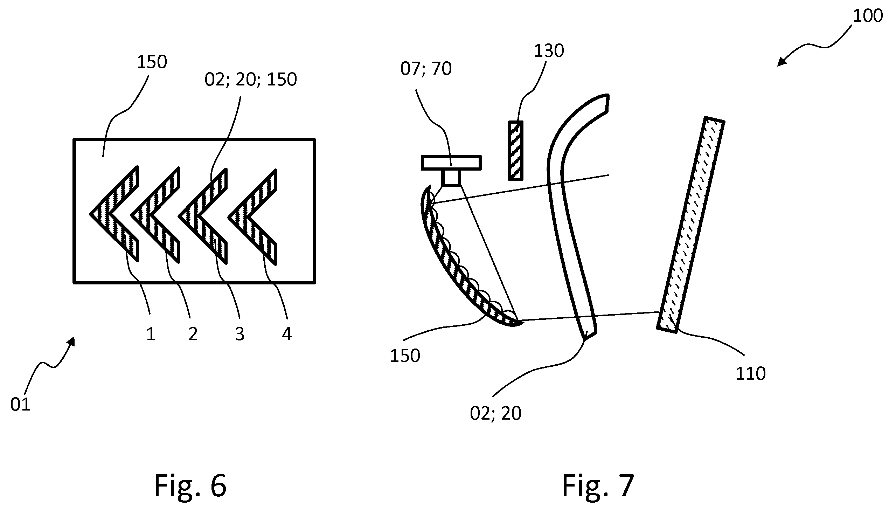

Ein in Fig. 1 in seinem Ablauf ganz oder in Teilen dargestelltes Verfahren zum Betrieb eines zur Erfüllung mindestens einer Lichtfunktion einer beispielsweise in Fig. 5 oder in Fig. 7 dargestellten Fahrzeugleuchte 100 vorgesehenen oder zumindest beitragenden, beispielsweise in Fig. 2, Fig. 3, Fig. 4 oder in Fig. 6 ganz oder in Teilen dargestellten Leuchtmittels 01 mit mindestens einer OLED 20 als wenigstens eine erste Lichtquelle 02 und mit mindestens einer zweiten, von einer OLED 20 verschiedenen Lichtquelle 07, vorzugsweise einer LED 70, dessen zumindest eine erste Lichtquelle 02 und dessen zumindest eine zweite Lichtquelle 07 mit einer abhängig von einem momentan vorgegebenen Betriebszustand schaltbaren Stromversorgung verbunden oder verbindbar ist, welcher momentan vorgegebene Betriebszustand einen Warmzustand vorsieht, bei dem die zumindest eine erste Lichtquelle 02 und/oder die zumindest eine zweite Lichtquelle 07 unter Lichtabstrahlung stromdurchflossen ist, oder einen Kaltzustand vorsieht, bei dem sowohl die zumindest eine erste Lichtquelle 02, als auch die zumindest eine zweite Lichtquelle 07 frei von einem Stromdurchfluss ist und keine Lichtabstrahlung aufweist, umfasst mehrere Verfahrensschritte.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die wenigstens eine erste Lichtquelle 02 und/oder für die wenigstens eine zweite Lichtquelle 07 des Leuchtmittels 01 vorgesehenen Betriebszustand. Sieht der vorgegebene Betriebszustand einen Warmzustand vor, so entspricht dies einer Erfüllung einer Lichtfunktion der Fahrzeugleuchte 100 oder einen Beitrag hierzu durch das Leuchtmittel 01 vor. Sieht der vorgegebene Betriebszustand einen Kaltzustand vor, so ist gegenwärtig keine Lichtfunktion der Fahrzeugleuchte 100 zu erfüllen.

Ein erster Verfahrensschritt I sieht eine Überwachung einer Temperatur mindestens einer als wenigstens eine erste Lichtquelle 02 des Leuchtmittels 01 vorgesehenen OLED 20 vor. Die Überwachung kann kontinuierlich oder in diskreten Zeitabständen erfolgen, beispielsweise in einem Sekundentakt. Die Zeitabstände sind klein genug gewählt, dass die Temperatur der OLED 20, selbst wenn diese zwischen zwei Zeitabständen eine erste Schwellentemperatur von vorzugsweise 95°C überschreiten würde, bis zur nächsten Temperaturerfassung eine beispielsweise bei 105°C liegende Temperaturgrenze nicht überschreiten kann, bei der die OLED 20 im Warmzustand eine irreversible Schädigung erfahren würde.

Ein auf den ersten Verfahrensschritt I folgender, zweiter Verfahrensschritt II sieht einen Vergleich der bei der Überwachung festgestellten Temperatur mit der ersten Schwellentemperatur vor. Diese erste Schwellentemperatur gibt eine erste Temperatur vor oder entspricht einer ersten Temperatur, die unterhalb der zuvor erwähnten Temperaturgrenze liegt, bei deren Überschreitung eine sich in einem Warmzustand befindliche OLED 20 eine irreversible Zerstörung erfährt. Diese erste Schwellentemperatur liegt vorzugsweise bei 95°C.

Ein dritter Verfahrensschritt III folgt auf den zweiten Verfahrensschritt II, wenn die bei der Überwachung festgestellte Temperatur die erste Schwellentemperatur unterschreitet. Ist das Ergebnis des im zweiten Verfahrensschritt II vorgenommenen Vergleichs, dass die bei der Überwachung festgestellte Temperatur kleiner ist, als die erste Schwellentemperatur, so folgt auf den zweiten Verfahrensschritt II der dritte Verfahrensschritt III, der einen Betrieb der mindestens einen OLED 20 des Leuchtmittels 01 im momentan vorgegebenen Betriebszustand vorsieht. Tritt der dritte Verfahrensschritt III ein und sieht der veränderliche, momentan vorgegebene Betriebszustand einen Warmzustand vor, entsprechend einer Lichtabgabe durch eine erste Lichtquelle 02 und/oder eine zweite Lichtquelle 07 des Leuchtmittels 01, ist die schaltbare Stromversorgung derart aufgeschaltet, dass die wenigstens eine erste Lichtquelle 02 des Leuchtmittels 01 stromdurchflossen ist und Licht abstrahlt. Tritt der dritte Verfahrensschritt III ein und sieht der veränderliche, momentan vorgegebene Betriebszustand einen Kaltzustand vor, entsprechend keiner Lichtabgabe weder durch eine erste Lichtquelle 02, noch durch eine zweite Lichtquelle 07 des Leuchtmittels 01, ist die schaltbare Stromversorgung abgeschaltet und die ersten und zweiten Lichtquellen 02, 07 des Leuchtmittels 01 sind weder stromdurchflossen, noch strahlten sie Licht ab.

Nach Durchlaufen des dritten Verfahrensschritts III folgt wieder der erste Verfahrensschritt I, wodurch sich das Verfahren zyklisch wiederholt.

Anstelle des dritten Verfahrensschritts III folgt auf den zweiten Verfahrensschritt II ein vierter Verfahrensschritt IV, wenn die bei der Überwachung festgestellte Temperatur die erste Schwellentemperatur erreicht oder überschreitet. Ist das Ergebnis des im zweiten Verfahrensschritt II vorgenommenen Vergleichs, dass die bei der Überwachung festgestellte Temperatur die erste Schwellentemperatur erreicht oder überschritten hat, so folgt auf den zweiten Verfahrensschritt II der vierte Verfahrensschritt IV, der eine zwangsweise Trennung der mindestens einen als wenigstens eine erste Lichtquelle 02 des Leuchtmittels 01 vorgesehenen OLED 20 von der Stromversorgung 03 unabhängig von dem momentan vorgegebenen Betriebszustand vorsieht, einhergehend mit einer Aufschaltung der wenigstens einen von einer OLED verschiedenen, zweiten Lichtquelle 07 des Leuchtmittels 01 auf die schaltbare Stromversorgung 03. Hierdurch wird im Falle eines einen Warmzustand und damit eine Lichtabstrahlung zur Erfüllung oder zum Beitrag zu einer Erfüllung einer Lichtfunktion der Fahrzeugleuchte 100 vorgebenden Betriebszustands, welcher eine Aufschaltung der schaltbaren Stromversorgung 03 zur Folge hat, die mindestens eine von einer OLED verschiedene, zweite Lichtquelle 07 des Leuchtmittels 01 stromdurchflossen und strahlt Licht ab. Sieht der veränderliche, momentan vorgegebene Betriebszustand einen Warmzustand der wenigstens einen Lichtquelle 02 des Leuchtmittels 01 vor, bei dem die schaltbare Stromversorgung 03 aufgeschaltet ist, wird die mindestens eine als OLED 20 ausgeführte erste Lichtquelle 02 des Leuchtmittels 01 durch die im vierten Verfahrensschritt IV erfolgende Zwangstrennung in den Kaltzustand versetzt, unabhängig vom momentan vorgegebenen Betriebszustand, und die mindestens eine von einer OLED verschiedene zweite Lichtquelle 07 des Leuchtmittels 01 in einen Warmzustand versetzt. Damit bleiben weitere, nicht als OLEDs ausgeführte zweite Lichtquellen 07 des Leuchtmittels 01 mit der aufgeschalteten, schaltbaren Stromversorgung 03 verbunden und dadurch im Warmzustand, wenn dies der Betriebszustand vorgibt. Sieht der veränderliche, momentan vorgegebene Betriebszustand einen Kaltzustand der ersten und zweiten Lichtquellen 02, 07 des Leuchtmittels 01 vor, bei dem die schaltbare Stromversorgung 03 abgeschaltet ist, verbleibt sowohl die mindestens eine von einer OLED verschiedene zweite Lichtquelle 07, als auch die mindestens eine als OLED 20 ausgeführte erste Lichtquelle 02 des Leuchtmittels 01 im Kaltzustand und damit dunkel. Durch die im vierten Verfahrensschritt IV erfolgende Zwangstrennung verbleibt die mindestens eine als OLED 20 ausgeführte erste Lichtquelle 02 des Leuchtmittels 01 bei einer Änderung des Betriebszustands außerdem weiterhin im Kaltzustand und deren Versetzen in den Warmzustand bei einer Änderung des momentan vorgegebenen Betriebszustands von einem Kalt- in einen Warmzustand wird verhindert. Bei einer Änderung des momentan vorgegebenen Betriebszustands von einem Kalt- in einen Warmzustand wechseln hierbei hingegen die nicht als OLEDs ausgeführte zweite Lichtquellen 07 des Leuchtmittels 01 durch eine Aufschaltung der schaltbaren Stromversorgung 03 aus dem Kalt- in den Warmzustand. Die im vierten Verfahrensschritt IV erfolgende zwangsweise Trennung versetzt damit nur die mindestens eine als wenigstens eine erste Lichtquelle 02 des Leuchtmittels 01 vorgesehene OLED 20 in den Kaltzustand oder verhindert deren Versetzung aus dem Kalt- in den Warmzustand, wodurch eine Erfüllung einer Lichtfunktion oder ein Beitrag zu deren Erfüllung weiterhin gewährleistet ist.

Wichtig ist hervorzuheben, dass die zwangsweise Trennung der mindestens einen als wenigstens eine erste Lichtquelle 02 des Leuchtmittels 01 vorgesehenen OLED 20 von der Stromversorgung 03 unabhängig von dem momentan vorgegebenen Betriebszustand sowohl eine galvanische Trennung der OLED-Kontakte umfassen kann, oder alternativ oder zusätzlich eine Sperrung des Stromdurchflusses auf einem kleinstmöglichen Niveau vorsehen kann. In Elektronikschaltungen werden im Allgemeinen keine galvanische Trennungen vorgenommen, sondern mittels eines oder mehrerer Halbleiterbauelemente, wie beispielsweise Transistoren, verwirklichte Schalter vorgesehen, welche auch in getrenntem, ausgeschalteten Zustand einen Minimalstrom passieren lässt. Der Ausdruck einer zwangsweisen Trennung umfasst daher auch eine Verringerung des Stromdurchflusses auf einen Minimaldurchlassstrom, etwa anhand eines mittels eines Halbleiterbauelements verwirklichten Schalters.

Nach dem vierten Verfahrensschritt IV kann das Verfahren in einem fünften Verfahrensschritt V enden, wie in Fig. 1 gestrichelt durch den Pfeil iv-v angedeutet. Ein Neustart des Verfahrens erfolgt dann, wenn ein mit einer mit einem ein entsprechendes Verfahren ausführenden Leuchtmittel 01 ausgestattete Fahrzeugleuchte versehenes Fahrzeug durch Abstellen und wiederanstellen dessen Zündung und/oder durch Verschließen und Wiederöffnen beispielsweise dessen Türverriegelung erneut benutzt wird und einen erneuten Benutzungszyklus erfährt.

Anstelle dass das Verfahren nach dem vierten Verfahrensschritt IV in einem fünften Verfahrensschritt V endet, kann vorgesehen sein, dass auf den vierten Verfahrensschritt IV wie durch den Pfeil iv-vi angedeutet ein sechster Verfahrensschritt VI folgt, der eine erneute Überwachung einer Temperatur mindestens einer als wenigstens eine erste Lichtquelle 02 des Leuchtmittels 01 vorgesehenen OLED 20 vorsieht. Auch diese Überwachung kann kontinuierlich oder in diskreten Zeitabständen erfolgen, beispielsweise in einem Sekundentakt.

Auf diesen sechsten Verfahrensschritt VI folgt ein siebter Verfahrensschritt VII, bei dem ein Vergleich der bei der Überwachung im sechsten Verfahrensschritt VI festgestellten Temperatur mit der ersten Schwellentemperatur erfolgt. Ist das Ergebnis diesen im siebten Verfahrensschritt VII ausgeführten Vergleichs, dass die bei der Überwachung im sechsten Verfahrensschritt VI festgestellte Temperatur gleich oder niedriger ist, als die erste Schwellentemperatur, so folgt auf den siebten Verfahrensschritt VII ein achter Verfahrensschritt VIII. Dieser achte Verfahrensschritt VIII sieht vor, dass nach einer vorangehenden zwangsweisen Trennung der mindestens einen als wenigstens eine erste Lichtquelle 02 des Leuchtmittels 01 vorgesehenen OLED 20 von der Stromversorgung 03 eine Wiederaufhebung der zwangsweisen Trennung der mindestens einen OLED 20 von der Stromversorgung 03 unter Entlassung der OLED 20 in den momentan vorgegebenen Betriebszustand erfolgt, einhergehend mit einer Trennung der wenigstens einen von einer OLED verschiedenen, zweiten Lichtquelle 07 des Leuchtmittels 01 von der schaltbaren Stromversorgung 03. Hierdurch verbleibt im Falle eines einen Warmzustand und damit eine Lichtabstrahlung zur Erfüllung oder zum Beitrag zu einer Erfüllung einer Lichtfunktion der Fahrzeugleuchte 100 vorgebenden Betriebszustands, welcher eine Aufschaltung der schaltbaren Stromversorgung 03 zur Folge hat, die mindestens eine von einer OLED verschiedene, zweite Lichtquelle 07 des Leuchtmittels 01 dunkel, wohingegen die mindestens eine als OLED 20 ausgeführte erste Lichtquelle 02 des Leuchtmittels 01 Licht abstrahlt.

Im Anschluss an den achten Verfahrensschritt VIII folgt wieder der erste Verfahrensschritt I, wodurch sich das Verfahren zyklisch wiederholt. Ist das Ergebnis diesen im siebten Verfahrensschritt VII ausgeführten Vergleichs, dass die bei der Überwachung im sechsten Verfahrensschritt VI festgestellte Temperatur nach wie vor höher ist, als die erste Schwellentemperatur, so werden der sechste Verfahrensschritt VI und der siebte Verfahrensschritt VII wie durch den gestrichelten Pfeil vii-vi angedeutet so lange wiederholt, bis die im sechsten Verfahrensschritt VI festgestellte Temperatur gleich oder niedriger ist, als die erste Schwellentemperatur.

Um eine durch ständiges Hin- und Herschalten zwischen der durch eine OLED 20 gebildete erste Lichtquelle 02 und der mindestens einen von der OLED verschiedenen zweiten Lichtquelle 07 als flackernd erscheinende Lichtabgabe des Leuchtmittels 01 zu vermeiden, kann das Verfahren die Aufhebung der zwangsweisen Trennung und/oder zwangsweisen Unterbindung einhergehend mit einer Entlassung der OLED 20 in einen momentan vorgegebenen Betriebszustand und damit ein Wiedereinschalten der OLED 20 bei einem momentanen vorgegebenen Betriebszustand, der einen Warmzustand der OLED vorsieht, erst ab einer zweiten Schwellentemperatur vorsehen, die unterhalb der ersten Schwellentemperatur liegt, beispielsweise um deutliche 5° unter der ersten Schwellentemperatur.

Hierzu kann das Verfahren zusätzlich vorsehen, die durch eine OLED 20 gebildete erste Lichtquelle 02 erst dann wieder in den momentan vorgegebenen Betriebszustand zu entlassen, bei dem die OLED 20 anstelle der mindestens einen von der OLED verschiedenen zweiten Lichtquelle 07 des Leuchtmittels 01 entweder zur Erfüllung oder zum Beitrag zu einer momentan benötigten Lichtfunktion stromdurchflossen ist und Licht abstrahlt, wenn die bei der Überwachung festgestellte Temperatur die erste Schwellentemperatur unterschreitet und kleiner oder gleich der zweiten Schwellentemperatur ist.

Hierzu kann alternativ zum siebten Verfahrensschritt VII und dem auf diesen folgenden achten Verfahrensschritt VIII auf den sechsten Verfahrensschritt VI ein neunter Verfahrensschritt IX folgen, bei dem ein Vergleich der bei der Überwachung im sechsten Verfahrensschritt VI festgestellten Temperatur mit einer zweiten Schwellentemperatur erfolgt, welche niedriger ist, als die erste Schwellentemperatur. Ist das Ergebnis diesen im neunten Verfahrensschritt IX ausgeführten Vergleichs, dass die bei der Überwachung im sechsten Verfahrensschritt VI festgestellte Temperatur gleich oder niedriger ist, als die zweite Schwellentemperatur, so folgt auf den neunten Verfahrensschritt IX ein zehnter Verfahrensschritt X.

Dieser zehnte Verfahrensschritt X sieht vor, dass nach einer vorangehenden zwangsweisen Trennung der mindestens einen als wenigstens eine erste Lichtquelle 02 des Leuchtmittels 01 vorgesehenen OLED 20 von der schaltbaren Stromversorgung 03, einhergehend mit einer Aufschaltung der wenigstens einen von einer OLED verschiedenen, zweiten Lichtquelle 07 des Leuchtmittels 01 auf die schaltbare Stromversorgung 03, eine Wiederaufhebung der zwangsweisen Trennung der mindestens einen als eine erste Lichtquelle 02 des Leuchtmittels 01 vorgesehenen OLED 20 von der schaltbaren Stromversorgung 03 unter Entlassung der OLED 20 in den momentan vorgegebenen Betriebszustand, einhergehend mit einer Trennung der wenigstens einen von einer OLED verschiedenen, zweiten Lichtquelle 07 des Leuchtmittels 01 von der schaltbaren Stromversorgung 03 erfolgt.

Hierdurch verbleibt im Falle eines einen Warmzustand und damit eine Lichtabstrahlung zur Erfüllung oder zum Beitrag zu einer Erfüllung einer Lichtfunktion der Fahrzeugleuchte 100 vorgebenden Betriebszustands, welcher eine Aufschaltung der schaltbaren Stromversorgung 03 zur Folge hat, die mindestens eine von einer OLED verschiedene, zweite Lichtquelle 07 des Leuchtmittels 01 erst unterhalb der zweiten Schwellentemperatur dunkel. Die mindestens eine als OLED 20 ausgeführte erste Lichtquelle 02 des Leuchtmittels 01 strahlt im Falle eines einen Warmzustand und damit eine Lichtabstrahlung zur Erfüllung oder zum Beitrag zu einer Erfüllung einer Lichtfunktion der Fahrzeugleuchte 100 vorgebenden Betriebszustands, welcher eine Aufschaltung der schaltbaren Stromversorgung 03 zur Folge hat, erst unterhalb der zweiten Schwellentemperatur wieder Licht ab.

Im Anschluss an den zehnten Verfahrensschritt X folgt ebenfalls wieder der erste Verfahrensschritt I, wodurch sich das Verfahren zyklisch wiederholt. Ist das Ergebnis diesen im neunten Verfahrensschritt IX ausgeführten Vergleichs, dass die bei der Überwachung im sechsten Verfahrensschritt VI festgestellte Temperatur höher ist, als die zweite Schwellentemperatur, so werden der sechste Verfahrensschritt VI und der neunte Verfahrensschritt IX wie durch den gestrichelten Pfeil ix-vi angedeutet so lange wiederholt, bis die im sechsten Verfahrensschritt VI festgestellte Temperatur gleich oder niedriger ist, als die zweite Schwellentemperatur. Hierdurch kann ein ständiges Hin- und Herschalten zwischen der mindestens einen als OLED 20 ausgeführten ersten Lichtquelle 02 und der mindestens einen von einer OLED verschiedenen zweiten Lichtquelle 07 des Leuchtmittels 01, welches Hin- und Herschalten gegebenenfalls von einer flackernden Lichtabgabe begleitet oder als eine solche flackernde Lichtabhabe wahrgenommen werden könnte, vermeiden werden, indem das Verfahren die Aufhebung der zwangsweisen Trennung und/oder zwangsweisen Unterbindung von der Stromversorgung 03 einhergehend mit einer Entlassung der mindestens einen als eine OLED 20 ausgeführten ersten Lichtquelle 02 des Leuchtmittels 01 in einen momentan vorgegebenen Betriebszustand und damit ein Wiedereinschalten der OLED 20 bei einem momentanen vorgegebenen Betriebszustand, der einen Warmzustand zumindest einer der ersten und zweiten Lichtquellen 02, 07 des Leuchtmittels 01 vorsieht, erst ab einer zweiten Schwellentemperatur vorsieht, die unterhalb der ersten Schwellentemperatur liegt, beispielsweise um deutliche 5° unter der ersten Schwellentemperatur.

Um OLEDs vor einer Überhitzung und damit vor einer Zerstörung zu schützen, sieht die Erfindung damit ein hartes Abschalten von OLEDs oberhalb einer ersten Schwellentemperatur vor, die unterhalb deren im Warmzustand ertragbaren Temperaturgrenze liegt. Um dennoch auch oberhalb der ersten Schwellentemperatur eine Lichtfunktion einer Fahrzeugleuchte zu erfüllen oder zu deren Erfüllung beizutragen, sieht die Erfindung wenigstens eine von einer OLED verschiedene Lichtquelle, vorzugsweise eine oder mehrere LEDs vor, die kurz vor oder spätestens mit dem mit einer Abschaltung der mindestens einen als eine erste Lichtquelle 02 vorgesehenen OLED 20 einhergehenden Erreichen der ersten Schwellentemperatur zur Erfüllung der Lichtfunktion oder zu deren Beitrag gegebenenfalls zunächst bei- und schließlich einspringt.

Die Überwachung einer Temperatur mindestens einer als wenigstens eine erste Lichtquelle 02 des Leuchtmittels 01 vorgesehenen OLED 20 kann erfolgen, indem eine Temperatur erfasst wird, von welcher Temperatur aus auf die Temperatur der OLED 20 rückgeschlossen werden kann.

Beispielsweise kann die Überwachung der Temperatur durch Erfassung einer Temperatur der OLED 20 und/oder einer Temperatur einer unmittelbaren Umgebung mindestens einer als wenigstens eine erste Lichtquelle 02 des Leuchtmittels 01 vorgesehenen OLED 20 und/oder durch Erfassung mindestens einer einer Temperatur der OLED 20 und/oder einer Temperatur einer unmittelbaren Umgebung der OLED 20 proportionalen Größe erfolgen.

Eine denkbare Größe ist beispielsweise ein bei konstanter Spannung durch ein Elektronikbauteil des Leuchtmittels 01 fließender, sich mit verändernder Temperatur verändernder Strom und/oder eine sich bei konstantem durch ein Elektronikbauteil des Leuchtmittels 01 fließendem Strom mit verändernder Temperatur verändernde Spannung. Auch die Messung eines sich mit verändernder Temperatur verändernden Widerstands eines Elektronikbauteils, sei es ein induzierter oder ein ohmscher Widerstand, eignet sich grundsätzlich als Größe zur Erfassung einer Temperatur.

Bei dem Elektronikbauteil kann es sich um einen Temperatursensor, einen Widerstand, ein Halbleiterbauelement oder gar um eine erste oder zweite Lichtquelle 02, 07 des Leuchtmittels, beispielsweise eine OLED 20 oder eine LED 70 handeln, um nur einige denkbare Ausgestaltungen zu nennen. Beispielsweise eignet sich eine Strom- und/oder Spannungskurve einer LED 70 und/oder einer OLED 20 ebenfalls, um anhand der erfassten Werte für den Strom und/oder die Spannung auf die momentan vorherrschende Temperatur rückzuschließen, welche die LED und/oder die OLED 20 gerade erfährt bzw. welcher die LED 70 und/oder die OLED 20 gerade ausgesetzt ist.

Das Verfahren kann zusätzlich beispielsweise in einem wie durch die gestrichelten Pfeile i-xi und xi-ii angedeutet zwischen dem ersten Verfahrensschritt I und dem zweiten Verfahrensschritt II stattfindenden elften Verfahrensschritt XI eine Überwachung des momentan vorgegebenen Betriebszustands vorsehen. Dabei wird zwischen einem Warmzustand, bei dem die anhand des momentan vorgegebenen Betriebszustands schaltbare Stromversorgung 03 aufgeschaltet ist und eine Lichtabgabe der wenigstens einen ersten Lichtquelle 02 und/oder der mindestens einen zweiten Lichtquelle 07 des Leuchtmittels 01 vorgegeben ist, und einem Kaltzustand, bei dem die anhand des momentan vorgegebenen Betriebszustands schaltbare Stromversorgung 03 getrennt und/oder abgeschaltet ist und keine Lichtabstrahlung weder einer durch eine OLED 20 gebildeten ersten Lichtquelle 02, noch einer beispielsweise durch eine LED gebildeten zweiten Lichtquelle 07 des Leuchtmittels 01 vorgegeben ist, unterschieden.

Ein eine Überwachung des momentan vorgegebenen Betriebszustands ausführendes Verfahren kann in seinen aufeinander folgenden Verfahrensschritten beispielsweise vorsehen, dass wenn:
- die bei der Überwachung festgestellte Temperatur die erste Schwellentemperatur überschreitet und der überwachte, vorgegebene Betriebszustand den Warmzustand des Leuchtmittels 01 entsprechend einer Lichtabgabe dessen wenigstens einen ersten Lichtquelle 02 und/oder dessen wenigstens einen zweiten Lichtquelle 07 vorsieht, die mindestens eine OLED 20 von der Stromversorgung 03 zwangsweise getrennt und in den Kaltzustand versetzt wird, und die mindestens eine von der OLED verschiedene zweite Lichtquelle 07 des Leuchtmittels 01 auf die schaltbare Stromversorgung 03 aufgeschaltet wird und damit mit der schaltbaren Stromversorgung 03 zwangsweise verbunden und in den Warmzustand versetzt wird,
- die bei der Überwachung festgestellte Temperatur die erste Schwellentemperatur überschreitet und der überwachte, vorgegebene Betriebszustand den Kaltzustand des Leuchtmittels 01 und damit weder eine Lichtabgabe der wenigstens einen durch eine OLED 20 gebildeten ersten Lichtquelle 02, noch der wenigstens einen von einer OLED verschiedenen zweiten Lichtquelle 07 des Leuchtmittels 01 vorsieht, die mindestens eine OLED 20 im Kaltzustand belassen und ein Wechsel in den Warmzustand der mindestens einen OLED 20 zwangsweise unterbunden wird, während die mindestens eine von einer OLED verschiedene zweite Lichtquelle 07 des Leuchtmittels 01 ebenfalls im Kaltzustand belassen wird, aber auf die aufgrund des den Kaltzustand vorsehenden momentanen Betriebszustands momentan abgeschaltete schaltbare Stromversorgung 03 aufgeschaltet bleibt, um im Falle des mit einer Aufschaltung der schaltbaren Stromversorgung 03 einhergehenden Wechsels des momentan vorgegebenen Betriebszustands von einem Kalt- in den Warmzustand eine Lichtabgabe der mindestens einen von einer OLED verschiedenen zweiten Lichtquelle 07 zu gestatten, und
- die bei der Überwachung festgestellte Temperatur die erste Schwellentemperatur unterschreitet, die zwangsweise Trennung von der schaltbaren Stromversorgung 03 einhergehend mit der zwangsweisen Unterbindung der Stromversorgung der als eine erste Lichtquelle 02 vorgesehenen OLED 20 aufgehoben und die mindestens eine OLED 20 in den überwachten, momentan vorgegebenen Betriebszustand, der einen Warm- oder Kaltzustand der mindestens einen OLED 20 vorsieht, entlassen wird, und die Aufschaltung der mindestens einen von der OLED verschiedenen zweiten Lichtquelle 07 zumindest zur Erfüllung der Lichtfunktion oder zu deren Beitrag auf die schaltbare Stromversorgung 03 zu unterbinden.

Damit wird oberhalb der ersten Schwellentemperatur ein Betriebszustand, der einen Warmzustand vorgibt, durch die mindestens eine von einer OLED verschiedene zweite Lichtquelle 07 des Leuchtmittels erfüllt, wohingegen der durch einen Betriebszustand vorgegebener Warmzustand unterhalb der ersten Schwellentemperatur von der mindestens einen durch eine OLED 20 gebildeten ersten Lichtquelle 02 des Leuchtmittels 01 erfüllt wird.

In Kombination mit einer zweiten, niedrigeren Schwellentemperatur kann ein solches, eine Überwachung des momentan vorgegebenen Betriebszustands ausführendes Verfahren vorsehen, dass nach einer zuvor stattgefundenen zwangsweisen Trennung der mindestens eine OLED 20 von der schaltbaren Stromversorgung 03 eine Aufhebung der zwangsweisen Trennung der mindestens eine OLED 20 von der Stromversorgung 03 unter Entlassung der mindestens einen OLED 20 in den überwachten, momentan vorgegebenen Betriebszustand, der einen Warm- oder Kaltzustand der mindestens einen OLED 20 vorsieht, einhergehend mit einer Aufhebung der Aufschaltung der mindestens einen von einer OLED verschiedenen zweiten Lichtquelle 07 des Leuchtmittels 01 auf die schaltbare Stromversorgung 03, erst erfolgt, wenn die bei der Überwachung festgestellte Temperatur die zweite Schwellentemperatur, welche niedriger ist, als die erste Schwellentemperatur, erreicht oder unterschreitet.

Die Erfindung erlaubt einen Schutz von als Lichtquellen für Leuchtmittel zum Einsatz in Fahrzeugleuchten verwendeten OLEDs vor einer Zerstörung durch Überhitzung unter gleichzeitiger Sicherstellung der ständigen Bereitschaft einer Erfüllung einer momentan benötigten, zumindest unterhalb einer ersten Schwellentemperatur durch eine OLED als eine erste Lichtquelle des Leuchtmittels zu erfüllenden Lichtfunktion.

Bei einem in Fig. 2, Fig. 3, Fig. 4 oder in Fig. 6 ganz oder in Teilen dargestellten, beispielsweise zur Verwendung in einer als Heckleuchte ausgeführten, beispielsweise in Fig. 5 und Fig. 7 dargestellten Fahrzeugleuchte 100 vorgesehenen, zur Ausführung eines zuvor beschriebenen Verfahrens geeigneten Leuchtmittel 01 mit mindestens einer OLED 20 als wenigstens eine erste Lichtquelle 02 und mit mindestens einer von einer OLED verschiedenen zweiten Lichtquelle 07, vorzugsweise einer oder mehrerer LEDs 70, ist dessen zumindest eine durch eine OLED 20 gebildete erste Lichtquelle 02 und dessen mindestens eine von einer OLED verschiedene, zweite Lichtquelle 07 mit einer abhängig von einem momentan vorgegebenen Betriebszustand schaltbaren Stromversorgung 03 verbunden oder verbindbar.

Dessen zumindest eine durch eine OLED 20 gebildete erste Lichtquelle 02 und dessen mindestens eine von einer OLED verschiedene, zweite Lichtquelle 07 sind im Wechsel mit einer abhängig von einem momentan vorgegebenen Betriebszustand schaltbaren Stromversorgung 03 verbunden oder verbindbar, wobei unterhalb einer ersten Schwellentemperatur die zumindest eine durch eine OLED 20 gebildete erste Lichtquelle 02 und oberhalb der ersten Schwellentemperatur die mindestens eine von einer OLED verschiedene, zweite Lichtquelle 07 mit der abhängig von einem momentan vorgegebenen Betriebszustand schaltbaren Stromversorgung 03 verbunden oder verbindbar ist.

Der momentan vorgegebene Betriebszustand sieht einen Warmzustand, bei dem die zumindest eine erste Lichtquelle 02 und/oder die mindestens eine zweite Lichtquelle 07 des Leuchtmittels 01 unter Lichtabstrahlung stromdurchflossen ist, oder einen Kaltzustand vor, bei dem sowohl die zumindest eine erste Lichtquelle 02, als auch die mindestens eine zweite Lichtquelle 07 des Leuchtmittels 01 frei von einem Stromdurchfluss ist und weder die zumindest eine erste Lichtquelle 02, noch die mindestens eine zweite Lichtquelle 07 des Leuchtmittels 01 Licht abstrahlt. Das Leuchtmittel 01 umfasst:
- Temperaturüberwachungsmittel 04 zur Überwachung der Temperatur mindestens einer als eine erste Lichtquelle 02 des Leuchtmittels 01 vorgesehenen OLED 20.
- Vergleichsmittel 05 zum Vergleich der bei der Überwachung festgestellten Temperatur mit einer ersten Schwellentemperatur, welche unterhalb einer Temperaturgrenze liegt, bei deren Überschreitung eine sich im Warmzustand befindliche OLED 20 eine irreversible Zerstörung erfährt. Die Vergleichsmittel 05 zum Vergleich der bei der Überwachung festgestellten Temperatur mit der ersten Schwellentemperatur erzeugen ein vom Ergebnis des Vergleichs abhängiges Ausgangssignal.
- Steuerungsmittel 06 zur Beeinflussung einer Zwangstrennung und Aufschaltung mindestens einer als wenigstens eine erste Lichtquelle 02 des Leuchtmittels 01 vorgesehenen OLED 20 im Wechsel mit mindestens einer von einer OLED verschiedenen, bevorzugt eine LED 70 umfassenden zweiten Lichtquelle 07 des Leuchtmittels 01 von und mit einer schaltbaren Stromversorgung 03 anhand des Ausgangssignals.

Das Ausgangssignal veranlasst die Steuerungsmittel 06:
- die mindestens eine als wenigstens eine erste Lichtquelle 02 des Leuchtmittels 01 vorgesehene OLED 20 auf die schaltbare Stromversorgung 03 aufgeschaltet und damit gemäß einem momentan vorgegebenen Betriebszustand betreibbar sowie die mindestens eine von einer OLED verschiedene zweite Lichtquelle 07 des Leuchtmittels 01 von der schaltbare Stromversorgung 03 zwangsgetrennt zu belassen und dadurch deren Lichtabgabe unabhängig vom vorgegebenen Betriebszustand zu verhindern, wenn die bei der Überwachung festgestellte Temperatur die erste Schwellentemperatur unterschreitet. Hierdurch wird die mindestens eine als OLED 20 ausgeführte erste Lichtquelle 02 des Leuchtmittels 01 im momentan vorgegebenen Betriebszustand betrieben.
- die mindestens eine als wenigstens eine erste Lichtquelle 02 des Leuchtmittels 01 vorgesehene OLED 20 von der schaltbaren Stromversorgung 03 zwangsweise zu trennen und dadurch deren Lichtabgabe unabhängig vom vorgegebenen Betriebszustand zu verhindern, sowie die mindestens eine von einer OLED verschiedene zweite Lichtquelle 07 des Leuchtmittels 01 auf die schaltbare Stromversorgung 03 aufzuschalten und damit gemäß einem momentan vorgegebenen Betriebszustand betreibbar zu machen, wenn als Ergebnis des Vergleichs die bei der Überwachung festgestellte Temperatur die erste Schwellentemperatur erreicht oder überschreitet, um einen Kaltzustand der als mindestens eine erste Lichtquelle 02 des Leuchtmittels 01 vorgesehenen OLED 20 zu erzwingen.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die mindestens eine durch eine OLED 20 gebildete erste Lichtquelle 02 und/oder die mindestens eine von einer OLED verschiedene, zweite Lichtquelle 07 des Leuchtmittels 01 vorgesehenen Betriebszustand, entsprechend einer Lichtabstrahlung zumindest der mindestens einen ersten Lichtquelle 02 und/oder der mindestens einen zweiten Lichtquelle 07 des Leuchtmittels 01. Der momentan vorgegebene Betriebszustand sieht hiernach einen Warmzustand vor, wenn eine Lichtabgabe erforderlich ist, oder einen Kaltzustand, wenn keine Lichtabgabe erforderlich ist, entsprechend weder einer Lichtabgabe der mindestens einen ersten Lichtquelle 02, nochder mindestens einen zweiten Lichtquelle 07 des Leuchtmittels 01.

Die Temperaturüberwachungsmittel 04 zur Überwachung der Temperatur mindestens einer als wenigstens eine erste Lichtquelle 02 des Leuchtmittels 01 vorgesehenen OLED 20 können Mittel zur Erfassung einer Temperatur umfassen, welche einen Rückschluss auf die Temperatur der OLED 20 zulässt, beispielsweise durch unmittelbare Erfassung der Temperatur der OLED 20 oder einer der OLED 20 proportionalen Temperatur.

Die Temperaturüberwachungsmittel 04 können alternativ oder zusätzlich der Erfassung einer Temperatur mindestens einer als wenigstens eine erste Lichtquelle 02 des Leuchtmittels 01 vorgesehenen OLED 20 und/oder einer Temperatur einer unmittelbaren Umgebung mindestens einer als erste Lichtquelle 02 des Leuchtmittels 01 vorgesehenen OLED 20 und/oder der Erfassung mindestens einer einer Temperatur mindestens einer als erste Lichtquelle 02 des Leuchtmittels 01 vorgesehenen OLED 20 und/oder einer Temperatur einer unmittelbaren Umgebung mindestens einer als erste Lichtquelle 02 des Leuchtmittels 01 vorgesehenen OLED 20 proportionalen Größe dienen.

Grundsätzlich kann demnach eine Überwachung einer Temperatur mindestens einer als wenigstens eine erste Lichtquelle 02 des Leuchtmittels 01 vorgesehenen OLED 20 erfolgen, indem eine Temperatur und/oder Größe erfasst wird, von welcher Temperatur und/oder Größe aus auf die Temperatur der OLED 20 rückgeschlossen werden kann.

Eine denkbare Größe ist beispielsweise ein bei konstanter Spannung durch ein Elektronikbauteil des Leuchtmittels 01 fließender, sich mit verändernder Temperatur verändernder Strom und/oder eine sich bei konstantem durch ein Elektronikbauteil des Leuchtmittels 01 fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils des Leuchtmittels 01 eignet sich grundsätzlich als Größe zur Erfassung einer Temperatur.

Bei dem Elektronikbauteil des Leuchtmittels 01 kann es sich um einen Temperatursensor, einen Widerstand, ein Halbleiterbauelement oder gar um eine erste Lichtquelle 02 oder um eine zweite Lichtquelle 07 des Leuchtmittels 01 handeln, beispielsweise eine OLED 20 oder eine LED 70, um nur einige denkbare Ausgestaltungen zu nennen. Beispielsweise eignet sich eine Strom- und/oder Spannungskurve einer LED 70 und/oder einer OLED 20 ebenfalls, um anhand der erfassten Werte für den Strom und/oder die Spannung auf die momentan vorherrschende Temperatur rückzuschließen, welche die LED 70 und/oder die OLED 20 gerade erfährt bzw. welcher die LED 70 und/oder die OLED 20 gerade ausgesetzt sind.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Die Temperaturüberwachungsmittel 04 mindestens einer als erste Lichtquelle 02 vorgesehenen OLED 20 können Mittel zur Erfassung einer oder mehrerer und/oder eine Kombination zuvor genannter Größen umfassen und/oder sie können eines oder mehrere und/oder eine Kombination der erwähnten Elektronikbauteile umfassen und/oder sie können einen oder mehrere Temperatursensoren, wie etwa einen oder mehrere und/oder eine Kombination der zuvor genannten Temperatursensoren umfassen.

Die Steuerungsmittel 06 zur Beeinflussung der Stromversorgung mindestens einer als wenigstens eine erste Lichtquelle 02 des Leuchtmittels 01 vorgesehenen OLED 20 im Wechsel mit mindestens einer von einer OLED verschiedenen, vorzugsweise wenigstens eine LED 70 umfassenden, zweiten Lichtquelle 02 des Leuchtmittels 01 können einen in einer als Versorgungsleitung dienenden, beispielsweise als eine Leiterbahn eines Leiterbahnträgers ausgeführten Verbindungsleitung von der schaltbaren Stromversorgung 03 zu der mindestens einen als wenigstens eine erste Lichtquelle 02 des Leuchtmittels 01 dienenden OLED 20 und zu der mindestens einen von einer OLED verschiedenen zweiten Lichtquelle 07 des Leuchtmittels 01 angeordneten, vermittels des Ausgangssignals betätigbaren Schalter 60 umfassen.

Der Schalter 60 kann durch das Ausgangssignal betätigbar zwischen einer Aufschaltung der mindestens einen ersten Lichtquelle 02 des Leuchtmittels 01 auf die schaltbare Stromversorgung 03 unter Zwangstrennung der mindestens einen zweiten Lichtquelle 07 von der schaltbaren Stromversorgung 03 und einer zwangsweisen Trennung der mindestens einen ersten Lichtquelle 02 des Leuchtmittels 01 von der schaltbaren Stromversorgung 03 unter Aufschaltung der mindestens einen zweiten Lichtquelle 07 auf die schaltbare Stromversorgung 03 hin und her wechseln.

Die anhand eines vorgegebenen Betriebszustands schaltbare Stromversorgung 03 kann außerhalb des Leuchtmittels 01, beispielsweise fahrzeug- und/oder fahrzeugleuchtenseitig vorgesehen sein, wie dies in Fig. 2 dargestellt ist.

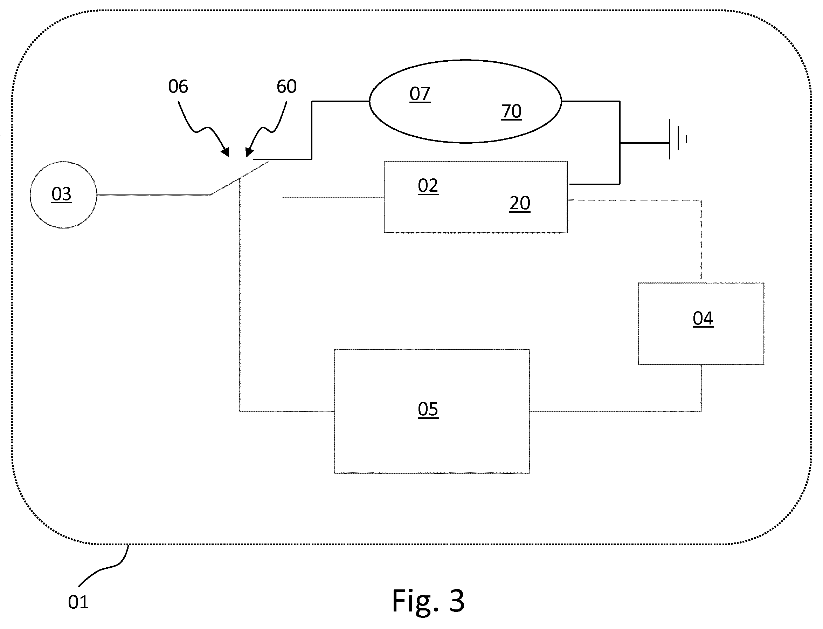

Alternativ kann die anhand eines vorgegebenen Betriebszustands schaltbare Stromversorgung 03 vom Leuchtmittel 01 umfasst und damit Teil des Leuchtmittels 01 sein, wie dies in Fig. 3 dargestellt ist.

Das Leuchtmittel 01 kann Mittel zur Überwachung eines vorgegebenen Betriebszustands mindestens einer als wenigstens eine erste Lichtquelle 02 des Leuchtmittels 01 vorgesehenen OLED 20 und/oder mindestens einer von einer OLED verschiedenen zweiten Lichtquelle 07 des Leuchtmittels 01 aufweisen. Diese Mittel zur Überwachung eines vorgegebenen Betriebszustands unterscheiden zwischen:
- einem Warmzustand, der eine Lichtabstrahlung durch wenigstens eine erste Lichtquelle 02 oder eine zweite Lichtquelle 07 oder sowohl wenigstens einer ersten Lichtquelle 02, als auch wenigstens einer zweiten Lichtquelle 07 des Leuchtmittels 01 vorsieht. Bei dem Warmzustand ist die schaltbare Stromversorgung 03 aufgeschaltet und zumindest die wenigstens eine erste Lichtquelle 02 und/oder die wenigstens eine zweite Lichtquelle 07 des Leuchtmittels 01 ist unter Lichtabgabe stromdurchflossen, und
- einem Kaltzustand, der weder durch eine erste Lichtquelle 02, noch durch eine zweite Lichtquelle 07 des Leuchtmittels 01 eine Lichtabstrahlung vorsieht. Bei dem Kaltzustand ist die schaltbare Stromversorgung 03 abgeschaltet. Weder ist eine erste Lichtquelle 02, noch eine zweite Lichtquelle 07 des Leuchtmittels 01 stromdurchflossen, geschweige denn eine erste Lichtquelle 02 oder eine zweite Lichtquelle 07 des Leuchtmittels 01 strahlen Licht ab.

Die Mittel zur Überwachung eines vorgegebenen Betriebszustands erlauben eine Softwaresteuerung des Leuchtmittels 01 anhand eines zuvor beschriebenen Verfahrens. Die Steuerungsmittel 06 zur Beeinflussung der schaltbaren Stromversorgung 03 wenigstens einer als erste Lichtquelle 02 des Leuchtmittels 01 vorgesehenen OLED 20 und wenigstens einer von einer OLED verschiedenen zweiten Lichtquelle 07 von können hierbei Programmmittel umfassen, die beispielsweise von einem Mikroprozessor ausgeführt anhand des beispielsweise digitalen Ausgangssignals zwischen Warm- und Kaltzustand der mindestens einen als eine OLED 20 ausgeführten ersten Lichtquelle 02 und der mindestens einen von einer OLED verschiedenen zweiten Lichtquelle 07 abhängig von der erfassten Temperatur, dem Temperaturvergleich und dem momentan vorgegebenen Betriebszustand wechseln.

Die Vergleichsmittel 05 zum Vergleich der bei der Überwachung festgestellten Temperatur mit einer ersten Schwellentemperatur, welche unterhalb einer Temperaturgrenze liegt, bei deren Überschreitung eine sich im Warmzustand befindliche OLED 20 eine irreversible Zerstörung erfährt, können zusätzlich zum Vergleich der bei der Überwachung festgestellten Temperatur mit einer zweiten Schwellentemperatur dienen, die niedriger als die erste Schwellentemperatur ist. Die Vergleichsmittel 05 erzeugen in diesem Fall ein Ausgangssignal, welches die Steuerungsmittel 06 zur Beeinflussung der Stromversorgung der mindestens einen als wenigstens eine erste Lichtquelle 02 des Leuchtmittels 01 vorgesehenen OLED 20 sowie der mindestens einen von einer OLED verschiedenen zweiten Lichtquelle 07 des Leuchtmittels 01 veranlasst:
- die mindestens eine als wenigstens eine erste Lichtquelle 02 des Leuchtmittels 01 vorgesehene OLED 20 auf die schaltbare Stromversorgung 03 aufgeschaltet und damit gemäß einem momentan vorgegebenen Betriebszustand betreibbar sowie die mindestens eine von einer OLED verschiedene zweite Lichtquelle 07 des Leuchtmittels 01 von der schaltbare Stromversorgung 03 zwangsgetrennt zu belassen und dadurch deren Lichtabgabe unabhängig vom vorgegebenen Betriebszustand zu verhindern, wenn die bei der Überwachung festgestellte Temperatur die erste Schwellentemperatur unterschreitet. Hierdurch wird die mindestens eine als OLED 20 ausgeführte erste Lichtquelle 02 des Leuchtmittels 01 im momentan vorgegebenen Betriebszustand betrieben.
- die mindestens eine als wenigstens eine erste Lichtquelle 02 des Leuchtmittels 01 vorgesehene OLED 20 von der schaltbaren Stromversorgung 03 zwangsweise zu trennen und dadurch deren Lichtabgabe unabhängig vom vorgegebenen Betriebszustand zu verhindern, sowie die mindestens eine von einer OLED verschiedene zweite Lichtquelle 07 des Leuchtmittels 01 auf die schaltbare Stromversorgung 03 aufzuschalten und damit gemäß einem momentan vorgegebenen Betriebszustand betreibbar zu machen, wenn als Ergebnis des Vergleichs die bei der Überwachung festgestellte Temperatur die erste Schwellentemperatur erreicht oder überschreitet. Hierdurch wird oberhalb der ersten Schwellentemperatur ein Kaltzustand der als mindestens eine erste Lichtquelle 02 des Leuchtmittels 01 vorgesehenen OLED 20 erzwungen. Auch bei einer Änderung des momentan vorgegebenen Betriebszustands verbleibt die OLED 20 im Kaltzustand und deren Aufschaltung auf die schaltbare Stromversorgung 03 bleibt zwangsweise unterbunden, wodurch diese nicht aus dem Kalt- in den Warmzustand versetzt werden kann.
- die zwangsweise Trennung der als mindestens eine erste Lichtquelle 02 des Leuchtmittels 01 vorgesehenen OLED 20 von der schaltbaren Stromversorgung 03 erst dann wieder aufzuheben sowie die mindestens eine von einer OLED verschiedene zweite Lichtquelle 07 des Leuchtmittels 01 von der schaltbare Stromversorgung 03 zwangsweise zu trennen, wenn als Ergebnis des Vergleichs die bei der Überwachung festgestellte Temperatur die zweite Schwellentemperatur erreicht oder unterschreitet, um die OLED 20 in den momentan vorgegebenen Betriebszustand, bei dem sich die OLED 20 entweder im Kaltzustand oder im Warmzustand befindet, zu entlassen.

Hierdurch wird die OLED 20 erst dann wieder in den momentan vorgegebenen Betriebszustand, bei dem die OLED 20 entweder stromdurchflossen ist und Licht abstrahlt, oder stromlos ist und dunkel verbleibt ist, entlassen, wenn die bei der Überwachung festgestellte Temperatur die erste Schwellentemperatur unterschreitet und kleiner oder gleich der zweiten Schwellentemperatur ist.

Damit erfolgt ein Einschalten oder Wiedereinschalten der OLED 20 bei einem momentanen vorgegebenen Betriebszustand, der einen Warmzustand einer ersten Lichtquelle 02 und/oder einer zweiten Lichtquelle 07 des Leuchtmittels 01 vorsieht, erst ab der zweiten Schwellentemperatur, die unterhalb der ersten Schwellentemperatur liegt, beispielsweise um deutliche 5° unter der ersten Schwellentemperatur.

Eine flackernde Lichtabgabe durch ständiges Hin- und Herschalten zwischen der als erste Lichtquelle 02 dienenden OLED 20 und der von einer OLED verschiedenen zweiten Lichtquelle 07 begleitet von einem ständigen Umspringen der Temperatur um die erste Schwellentemperatur wird hierdurch vermieden.

In einer in Fig. 5 und Fig. 7 dargestellten Fahrzeugleuchte 100 können ein oder mehrere entsprechende Leuchtmittel 01 vorgesehen sein. Eine mit mindestens einem entsprechenden Leuchtmittel 01 ausgestattete Fahrzeugleuchte 100 kann beispielsweise einen im Wesentlichen von einem Leuchtengehäuse und einer Lichtscheibe 110 zumindest teilweise umschlossenen Leuchteninnenraum aufweisen, in dem mindestens ein Leuchtmittel 01 beherbergt ist. Die Fahrzeugleuchte 100 kann beispielsweise als eine Heckleuchte für ein Kraftfahrzeug ausgebildet sein.

Die Erfindung stellt eine Möglichkeit dar, OLEDs 20 zur Erfüllung oder zum Beitragen einer Erfüllung einer Lichtfunktion in Fahrzeugleuchten in einem großen Temperaturbereich zu betreiben, ohne dass die Gefahr besteht, dass die Lichtfunktion beispielsweise in heißen Gegenden ausfällt.

Mit Hilfe einer die Überwachungsmittel 04, die Vergleichsmittel 05 und die Steuerungsmittel 06 umfassenden elektrischen Schaltungsanordnung, die auch Temperaturfühler beinhaltet, kann die OLED 20 abgeschaltet werden, bevor eine kritische Temperaturgrenze - die individuell einstellbar ist - erreicht wird. Diese liegt bei aktuellen OLEDs 20 im Kaltzustand etwa bei 115°C und darüber. Allerdings sind auch Temperaturen ab 95°C schon kritisch für OLEDs im Warmzustand 20. Ihre Lebensdauer nimmt überproportional stark ab mit der Temperatur.

Daher ist es vorteilhaft schon ab dieser niedrigeren Temperatur von 95°C die OLED 20 zu schützen. Dies ist insbesondere daher wichtig, da sich die OLED 20 durch ihren Betrieb auch noch zusätzlich erwärmt. Im ausgeschaltenen Zustand ist die OLED 20 somit kühler. Weiterhin reagieren die OLEDs 20 in Bezug auf Alterung und Zerstörung weitaus unsensibler auf hohe Temperaturen im Kaltzustand, als wenn die Schichten, aus denen sie aufgebaut sind, bestromt werden und somit unter elektrischem Stress stehen.

Die Erfindung sieht daher eine Komplettabschaltung zumindest von als erste Lichtquellen 02 verwendeten OLEDs 20 eines Leuchtmittels 01 mit dem Überschreiten der ersten Schwellentemperatur bereits vor Erreichen der kritischen Temperatur, bei der OLEDs im Warmzustand irreversibel Schaden nehmen vor. Damit die Lichtabstrahlung auch oberhalb der ersten Schwellentemperatur nicht abbricht und damit immer gewährleistet ist, verfügt das Leuchtmittel 01 über mindestens eine von einer OLED verschiedene zweite Lichtquelle 07, welche wenigstens dann betrieben wird, wenn die OLED 20 die komplette Abschaltung erfährt. Hierdurch schützt sich das Leuchtmittel 01 selbst vor einer Zerstörung seiner als OLEDs 20 ausgeführten ersten Lichtquellen 02. Bei günstigeren Temperaturbedingungen können die OLEDs 20 auch wieder angeschaltet werden.

Ebenfalls wichtig ist hervorzuheben, dass zwischen den Extrema des dritten Verfahrensschritts III, der auf den zweiten Verfahrensschritt II folgt, wenn die bei der Überwachung festgestellte Temperatur die erste Schwellentemperatur unterschreitet, und bei dem ein Betrieb der mindestens einen OLED 20 im momentan vorgegebenen Betriebszustand vorgesehen ist, und dem vierten Verfahrensschritt IV, der auf den zweiten Verfahrensschritt II folgt, wenn die bei der Überwachung festgestellte Temperatur die erste Schwellentemperatur erreicht oder überschreitet, und bei dem eine zwangsweise Trennung der mindestens einen als wenigstens eine erste Lichtquelle 02 des Leuchtmittels 01 vorgesehenen OLED 20 von der schaltbaren Stromversorgung 03 unabhängig von dem momentan vorgegebenen Betriebszustand vorgesehen ist, weitere Schwellentemperaturen und angepasste Strom- und/oder Spannungswerte und/oder Strom- und/oder Spannungsgrenzen vorgesehen sein können.

Hierdurch können mehrere Temperaturschwellwerte vorgesehen sein, ab denen beispielsweise unterschiedliche Regelungskurven etwa für den durch eine OLED 20 maximal hindurchgehenden Strom vorgesehen sein können.

Eine denkbare Ausgestaltung kann demnach vorsehen, die OLED 20 mit zunehmender Temperatur zunehmend zu dimmen. Beispielsweise kann vorgesehen sein, die OLED 20 bis zu einem ersten Temperaturschwellwert von beispielsweise 40°C mit 100% Bestromung betrieben.

Oberhalb des ersten Temperaturschwellwert wird die Bestromung immer mehr verringert, bis ein zweiter Temperaturschwellwert erreicht ist.

Bei dem zweiten Temperaturschwellwert wird die Bestromung der OLED 20 komplett abgeschaltet und die OLED 20 wie im vierten Verfahrensschritt IV vorgesehen zwangsweise von der schaltbaren Stromversorgung 03 getrennt.

Alternativ kann die Bestromung ab Erreichen des zweiten Temperaturschwellwerts konstant gehalten werden, bis ein dritter Temperaturschwellwert erreicht ist, bei dessen Erreichen eine zwangsweise Trennung der OLED 20 von der Stromversorgung gemäß dem vierten Verfahrensschritt stattfindet.

Die Regelkurve zwischen den Schwellwerten kann beliebig ausgeführt sein, beispielsweise exponentiell, linear, etc..

Alternativ oder zusätzlich kann das Verfahren vorsehen, dass ab einem ersten Schwellwert eine elektronische Regelung einsetzt. Diese elektronische Regelung regelt allerdings so, dass ein beispielsweise der Sollbestromung entsprechender, maximaler Strom an der OLED 20 anliegt. Diese Sollbestromung wird so lange wie möglich aufrecht erhalten. Bei höherer Umgebungstemperatur erhitzt sich auch die OLED 20 mehr und die Bestromung wird verringert, aber immer nur so, dass an der OLED 20 konstant eine spezifizierte Maximaltemperatur von beispielsweise 95°C anliegt. Diese wird über einen beispielsweise als Heißleiter (NTC; Negative Temperature Coefficient Thermistor) ausgeführten oder einen Heißleiter umfassenden Temperaturfühler an oder in der Nähe der OLED 20 gemessen. So kann so lange wie möglich die OLED 20 hell gehalten werden, ohne die erste Schwellentemperatur, welche unterhalb der Temperaturgrenze liegt, bei deren Überschreitung eine sich im Warmzustand befindliche OLED 20 eine irreversible Zerstörung erfährt, zu überschreiten. Zu bedenken ist hierbei natürlich, dass die Elemente thermisch träge sind und beispielsweise die OLED 20 wärmer wird, es aber einige Zeit dauert, bis der Sensor dies registriert, weil die Wärmeleitung aufgrund der Wärmekapazität der an der Wärmeübertragung beteiligten Komponenten Zeit benötigt und somit kleine Schwankungen möglich sind.

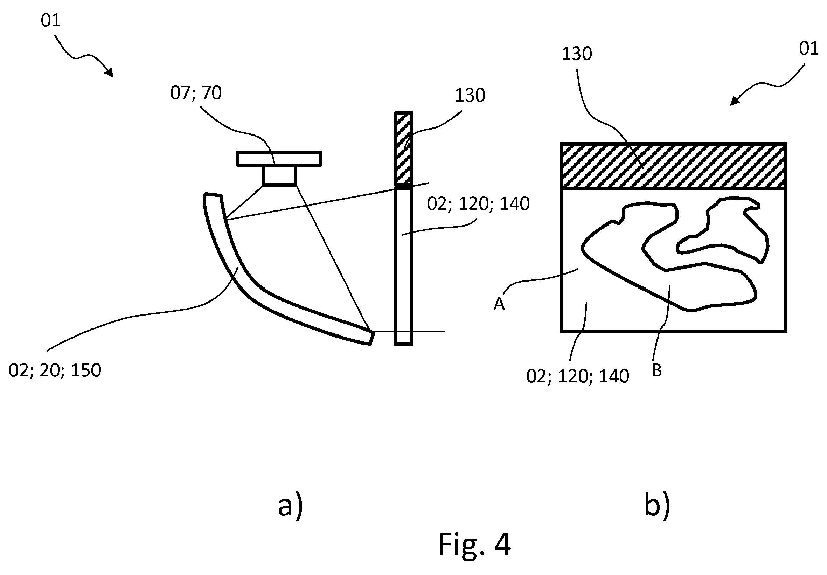

Es ist ersichtlich, dass eine OLED 20 als eine erste Lichtquelle 02 eines zur Erfüllung einer Lichtfunktion einer Fahrzeugleuchte 100 oder deren Erfüllung beitragenden, wenigstens eine erste Lichtquelle 02 und wenigstens eine von einer OLED verschiedene zweite Lichtquelle 07 umfassenden Leuchtmittels 01 verwendet wird. Damit wird die OLED 20 als Teil eines zur Erfüllung einer Lichtfunktion vorgesehenen oder beitragenden Leuchtmittels 01 in einer Fahrzeugleuchte 100, beispielsweise einer Heckleuchte verwendet. Dabei kann der spiegelnde Charakter der OLED 20 als Reflektor und/oder Linse verwendet werden, der mit einer zusätzlichen, insbesondere durch mindestens eine LED 70 gebildete zweite Lichtquelle des Leuchtmittels 01 beleuchtet werden kann, wie dies in Fig. 4 a) dargestellt ist.

Das spiegelnde Erscheinungsbild einer OLED 20 kann hierbei im aus- und angeschalteten Zustand in anderer Form, beispielsweise als Reflektor genutzt werden.

Fig. 4 zeigt einen möglichen Aufbau, bei der eine Freiform-OLED 20 als eine erste Lichtquelle 02 zusammen mit einer LED 70 als eine zweite Lichtquelle 07 eines Leuchtmittels 01 zur Erfüllung einer Lichtfunktion eingesetzt wird. Hierbei ist die OLED 20 unterhalb der LED 70 so geformt, dass sie der LED 70 als Reflektor 150 dient.

Zusätzlich kann das Leuchtmittel 01 durch eine zweite transparent ausgeführte OLED 120 erweitert werden, wie durch eine senkrecht eingezeichnete OLED 120 unterhalb einer möglichen Blende 130 dargestellt. Diese kann so geformt sein, dass sie wie eine Linse 140 wirkt und das Licht entsprechend ablenkt.

Beide OLEDs 20, 120, sowohl die einen Reflektor 130 bildende, als eine erste Lichtquelle 02 des auch die LED 70 als von einer OLED verschiedene, zweite Lichtquelle 07 umfassenden Leuchtmittels 01 vorgesehene OLED 20, als auch die beispielsweise als eine vorgesetzte Linse 140 ausgebildete, beispielsweise ebenfalls als eine erste Lichtquelle 02 des Leuchtmittels 01 vorgesehene OLED 120 können abhängig von der Temperatur angesteuert werden, so dass sie bei niedrigeren Temperaturen ihre Qualitätsvorteile hinsichtlich homogener Ausleuchtung bei hoher Leuchtdichte voll ausspielen können.

Bei höheren Temperaturen kann die vorzugsweise durch eine LED 70 gebildete, thermisch stabilere zweite Lichtquelle 07 des Leuchtmittels 01 für die Lichtfunktion die entsprechend nötigen Lichtstärken liefern, sozusagen als eine Art Notlichtfunktion, wenn die OLEDs 20, 120 aus thermischen Gründen abgeschaltet werden müssen. Hierdurch können über einen großen Temperaturbereich stets die gesetzlichen Mindestlichtwerte erfüllt werden auch bei hohen Lichtstärken.

Dies setzt einen Temperaturfühler, beispielsweise einen NTC in der Fahrzeugleuchte 100 voraus, der zur Erfassung der zur Steuerung erforderlichen momentanen Temperatur nötig ist. Ein solcher NTC kann Teil des Leuchtmittels 01 sein.

Weiterführend zu den voranstehend zu Fig. 4 beschriebenen Eigenschaften kann das gezeigte Leuchtmittel 01 auch wie folgt eingesetzt werden:
Die OLED 20 dient als eine erste Lichtquelle 02 für eine Schlusslichtfunktion und die LEDs 70 beleuchten die OLED 20 und liefern die nötigen Lichtwerte für eine Bremslichtfunktion. Sie bilden so eine ineinander gebaute Schlusslicht- und Bremslichtfunktion.

Auch kann beispielsweise eine Bremslichtfunktion und/oder eine Nebelschlusslichtfunktion mit einem Warnsignal, beispielsweise mit entsprechenden Symbolen, Logos und/oder andere Elementen, wie in Fig. 5 a) dargestellt, durch diesen Aufbau erweitert werden. Dabei können die unterschiedlichen Bereiche des Warnsignals abwechselnd und beispielsweise gegenläufig hell leuchten und dunkel sein und beispielsweise abwechselnd blinken.

Denkbar ist in diesem Zusammenhang eine Ausgestaltung beispielsweise einer als eine Linse 140 ausgebildeten OLED 120 und/oder einer als ein Reflektor 150 ausgebildeten OLED 20 mit passiven Partien A, in denen eine reine Beeinflussung von Licht gemäß der Ausbildung als Reflektor 150 oder Linse 140 stattfindet, und mit aktiven Partien B, in denen zusätzlich eine Lichtabstrahlung erfolgt.

Auch kann diese Erfindung für eine wischende Wiederholblinklichtfunktion zur Fahrtrichtungsanzeige eingesetzt werden, wie in Fig. 6 dargestellt. Hierbei können einzelne OLED-Segmente in einem zeitlichen Ablauf angesteuert werden, beispielsweise wie in Fig. 6 durch die Ziffernfolge 1-2-3-4 dargestellt.

Wie schon ausgeführt, kann die OLED (transparent und/oder teiltransparent) in einem Aufbau nicht nur als Reflektor 150 eingesetzt werden, sondern bei entsprechender Ausformung der Oberflächen beispielsweise auch als Linse 140 und/oder Streuelement, wie in Fig. 7 dargestellt.

Auch sind Ausführungen von Lichtfunktionen mit der Erfindung möglich, die bisher keine hohen Anforderungen bezüglich Homogenität hatten. So könnte beispielsweise eine RFS-Funktion mittels konventioneller LED-Technologie ausgeführt werden, bei der eine speziell geformte Freiformflächen-OLED die Reflektorfläche und/oder Linsenfläche ausführt. Die OLED 20 kann z. B. gleichzeitig zur Erfüllung und/oder zum Beitragen einer Erfüllung einer Schlusslichtfunktion eingesetzt werden - bei der eine hohe Lichthomogenität gefordert wird.

Hiermit ist es beispielsweise auch möglich zusätzliche Manöverleuchten in ein Fahrzeug platzsparend unterzubringen. Dies kann von Vorteil sein, beispielsweise wenn diese Zusatzscheinwerfer benötigt werden, um die Straße hinter dem Fahrzeug auszuleuchten. Dies ist insbesondere für Rückfahrkameras wichtig, die direkt hinter dem Fahrzeug eine möglichst homogene Flächenausleuchtung benötigen. Die OLED 20 kann hier als Reflektor 150 und/oder Linse 140 für eine LED 70 dienen und gleichzeitig die Lichtstärke erhöhen, indem sie zusätzlich auch eigenes Licht für die Ausleuchtung beisteuert.

Es besteht somit auch die Möglichkeit hohe Lichtstärken auf kleinem Raum zu erzeugen unter Zuhilfenahme von OLED- und LED-Licht.

Auch sind Kombinationen aus transparenten und spiegelnden OLEDs 20 in einem System möglich, die die dargestellten Aspekte miteinander vereinen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Leuchtmittel
- 02: erste Lichtquelle
- 03: Stromversorgung
- 04: Temperaturüberwachungsmittel
- 05: Vergleichsmittel
- 06: Steuerungsmittel
- 07: zweite Lichtquelle
- 20: OLED
- 60: Schalter
- 70: LED

- 100: Fahrzeugleuchte
- 110: Lichtscheibe
- 120: OLED
- 130: Blende
- 140: Linse
- 150: Reflektor

- 1: Ziffer
- 2: Ziffer
- 3: Ziffer
- 4: Ziffer

- A: passive Partie
- B: aktive Partie

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt
- IX: Verfahrensschritt
- X: Verfahrensschritt
- XI: Verfahrensschritt

- iv-v: Pfeil
- iv-vi: Pfeil
- vii-vi: Pfeil
- ix-vi: Pfeil
- i-xi: Pfeil
- xi-ii: Pfeil

## Patentansprüche

1. Verfahren zum Betrieb eines zur Erfüllung mindestens einer Lichtfunktion einer Fahrzeugleuchte (100) vorgesehenen Leuchtmittels (01) mit mindestens einer OLED (20; 120) als wenigstens eine erste Lichtquelle (02) und mit mindestens einer zweiten, von einer OLED verschiedenen Lichtquelle (07; 70), welches Verfahren:
- eine Überwachung einer Temperatur mindestens einer als wenigstens eine erste Lichtquelle (02) des Leuchtmittels (01) vorgesehenen OLED (20), und
- einen Vergleich der bei der Überwachung festgestellten Temperatur mit einer ersten Schwellentemperatur
vorsieht, wobei oberhalb der Schwellentemperatur die mindestens eine als OLED (20; 120) ausgebildete erste Lichtquelle (02) zwangsweise von der Stromversorgung getrennt wird und ausschließlich die mindestens eine zweite, von einer OLED verschiedene Lichtquelle (07; 70) die Lichtfunktion erfüllt.

2. Verfahren nach Anspruch 1, wobei die mindestens eine zweite, von einer OLED verschiedene Lichtquelle (07; 70) unterhalb einer Schwellentemperatur dunkel verbleibt und ausschließlich die mindestens eine OLED (20; 120) als wenigstens eine erste Lichtquelle (02) die Lichtfunktion erfüllt.

3. Verfahren nach Anspruch 1 oder 2, wobei die erste Schwellentemperatur bei 95°C liegt

4. Verfahren nach Anspruch 1, 2 oder 3, wobei das Verfahren eine Überwachung eines vorgegebenen Betriebszustands für mindestens eine erste Lichtquelle (02; 20; 120) und/oder zweite Lichtquelle (07; 70) des Leuchtmittels (01) vorsieht, wobei zwischen einem Warmzustand, bei dem zur Erfüllung einer Lichtfunktion zumindest eine erste Lichtquelle (02; 20; 120) und/oder eine zweite Lichtquelle (07; 70) unter Lichtabgabe stromdurchflossen ist, und einem Kaltzustand unterschieden wird, bei dem weder eine erste Lichtquelle (02; 20, 120), noch eine zweite Lichtquelle (07, 70) stromdurchflossen ist und dunkel verbleibt, und bei dem vorgesehen ist,
- die mindestens eine erste Lichtquelle (02; 20; 120) von einer Stromversorgung zwangsweise zu trennen und in den Kaltzustand zu versetzen und die mindestens eine zweite Lichtquelle (07; 70) mit der Stromversorgung zwangsweise zu verbinden und in den Warmzustand zu versetzen, wenn die bei der Überwachung festgestellte Temperatur die erste Schwellentemperatur überschreitet und der überwachte, vorgegebene Betriebszustand den Warmzustand vorsieht,
- die mindestens eine erste Lichtquelle (02; 20; 120) im Kaltzustand zu belassen und eine Aufschaltung der Stromversorgung der mindestens einen ersten Lichtquelle (02; 20; 120) zwangsweise zu unterbinden, sowie nur eine Aufschaltung der Stromversorgung der mindestens einen zweiten Lichtquelle (07; 70) zu gestatten, wenn die bei der Überwachung festgestellte Temperatur die erste Schwellentemperatur überschreitet und der überwachte, vorgegebene Betriebszustand den Kaltzustand der OLED vorsieht, und
- die zwangsweise Trennung und/oder zwangsweise Unterbindung der Stromversorgung der mindestens einen ersten Lichtquelle (02; 20; 120) aufzuheben und die mindestens eine erste Lichtquelle (02; 20; 120) in den überwachten, momentan vorgegebenen Betriebszustand zu entlassen sowie die Aufschaltung der Stromversorgung der mindestens einen zweiten Lichtquelle (07; 70) zu unterbinden, wenn die bei der Überwachung festgestellte Temperatur niedriger ist, als die erste Schwellentemperatur.

5. Verfahren nach einem der Ansprüche 1 bis 4, wobei die Aufhebung der zwangsweisen Trennung einhergehend mit einem Wiedereinschalten der mindestens einen ersten Lichtquelle (02; 20; 120) erst ab einer zweiten Schwellentemperatur erfolgt, die unterhalb der ersten Schwellentemperatur liegt.

6. Leuchtmittel (01) mit mindestens einer OLED (20; 120) als wenigstens eine erste Lichtquelle (02) und mit mindestens einer von einer OLED verschiedenen zweiten Lichtquelle (07; 70), dessen zumindest eine erste Lichtquelle (02; 20; 120) und dessen mindestens eine zweite Lichtquelle (07; 70) mit einer abhängig von einem momentan vorgegebenen Betriebszustand schaltbaren Stromversorgung (03) verbunden oder verbindbar sind, wobei unterhalb einer ersten Schwellentemperatur die zumindest eine erste Lichtquelle (02; 20; 120) und oberhalb der ersten Schwellentemperatur die mindestens eine zweite Lichtquelle (07; 70) mit der abhängig von einem momentan vorgegebenen Betriebszustand schaltbaren Stromversorgung (03) verbunden oder verbindbar ist.

7. Leuchtmittel nach Anspruch 6, mit mindestens einer LED (70) als ein zweites Leuchtmittel (07).

8. Leuchtmittel nach Anspruch 6 oder 7, wobei es
- Temperaturüberwachungsmittel (04) zur Überwachung der Temperatur mindestens einer als eine erste Lichtquelle (02) des Leuchtmittels (01) vorgesehenen OLED (20; 120),
- Vergleichsmittel (05) zum Vergleich der bei der Überwachung festgestellten Temperatur mit einer ersten Schwellentemperatur, welche unterhalb einer Temperaturgrenze liegt, bei deren Überschreitung eine sich im Warmzustand befindliche OLED (20; 120) eine irreversible Zerstörung erfährt, wobei die Vergleichsmittel (05) ein vom Ergebnis des Vergleichs abhängiges Ausgangssignal erzeugen, und
- Steuerungsmittel (06; 60) zur Beeinflussung einer Zwangstrennung und Aufschaltung mindestens einer als wenigstens eine erste Lichtquelle (02) vorgesehenen OLED (20; 120) im Wechsel mit mindestens einer von einer OLED verschiedenen zweiten Lichtquelle (07; 70) von und mit einer schaltbaren Stromversorgung (03) anhand des Ausgangssignals
umfasst.

9. Leuchtmittel nach Anspruch 8, wobei die Steuerungsmittel (06) einen Schalter (60) umfassen.

10. Fahrzeugleuchte mit mindestens einem zur Erfüllung einer im Fahrbetrieb eines Fahrzeugs vorgeschriebenen Lichtfunktion vorgesehenen oder einer vorgegebenen Lichtverteilung einer im Fahrbetrieb eines Fahrzeugs vorgeschriebenen Lichtfunktion zumindest beitragenden Leuchtmittel (01) mit wenigstens einer OLED (20, 120) als mindestens eine erste Lichtquelle (02), **gekennzeichnet durch** ein Leuchtmittel nach einem der Ansprüche 6 bis 9.
